(19) Europäisches Patentamt
European Patent Office
Office européen des brevets

(11) EP 0 927 971 B1

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***G07B 17/00*** *(2006.01)*

(21) Anmeldenummer: **98250409.4**

(22) Anmeldetag: **23.11.1998**

(54) **Verfahren und postalisches Gerät mit einer Chipkarten-Schreib/Leseeinheit zum Nachladen von Änderungsdaten per Chipkarte**

Method and postal apparatus with a chipcard read/write unit for reloading change data into a chipcard

Procédé et dispositif postal avec une unité de lecture/écriture de cartes à puce pour le rechargement de données de changement dans une carte à puce

(84) Benannte Vertragsstaaten:
**CH DE FR GB IT LI**

(30) Priorität: **15.12.1997 DE 19757653**

(43) Veröffentlichungstag der Anmeldung:
**07.07.1999 Patentblatt 1999/27**

(73) Patentinhaber: **Francotyp-Postalia GmbH**
**16547 Birkenwerder (DE)**

(72) Erfinder: **Günther, Stephan**
**13465 Berlin (DE)**

(56) Entgegenhaltungen:
**EP-A- 0 762 338**
**EP-A- 0 789 333**
**US-A- 4 802 218**
**US-A- 5 490 077**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 927 971 B1

## Beschreibung

Die Erfindung betrifft ein Verfahren und ein postalisches Gerät, insbesondere eine Frankiermaschine, mit einer Chipkarten-Schreib/Leseeinheit zum Nachladen von Änderungsdaten per Chipkarte in eine Frankiermaschine oder in eine Waage, gemäß der im Oberbegriff der Ansprüche 1 und 4 angegebenen Art. Beim erstmaligem Einstecken der Chipkarte erfolgt nach dem ersten Nachladen zusätzlich ein Einschreiben in die Chipkarte. Dabei werden Daten in der Chipkarte in vorbestimmter Weise verändert, so daß bei einem wiederholten Datenladen die Chipkarte nur noch in derselbem Gerät bzw. Frankiermaschine brauchbare Daten liefert. Die Änderungsdaten betreffen die Postbeförderer-Kennung und tarifliche Änderungen einer Portogebührentabelle.

Das Nachladen von Portogebührentabellen per Chipkarte an sich über eine Chipkarten-Schreib/Leseeinheit in eine Frankiermaschine ist bereits für Frankiermaschinen aus US 5,606,508 als auch für Waagen aus US 5,710,706 vorbekannt. Die Steuereinheit der Frankiermaschine übt dabei eine Überwachungsfunktion bezüglich der Bedingungen für eine Datenaktualisierung aus und steuert das Nachladen.

Moderne Frankiermaschinen, wie die aus der US 4.746.234 bekannte Thermotransfer-Frankiermaschine, setzen eine volielektronische digitale Druckvorrichtung ein. Damit ist es prinzipiell möglich, beliebige Texte und Sonderzeichen im Frankierstempeldruckbereich und ein beliebiges oder ein einer Kostenstelle zugeordnetes Werbeklischee zu drucken. So hat zum Beispiel die Frankiermaschine T1000 der Anmelderin einen Mikroprozessor, welcher von einem gesicherten Gehäuse umgeben ist, das eine Öffnung für die Zuführung eines Briefes aufweist. Bei einer Briefzuführung übermittelt ein mechanischer Briefsensor (Mikroschalter) ein Druckanforderungssignal an den Mikroprozessor. Der Frankierabdruck beinhaltet eine zuvor eingegebene und gespeicherte postalische Information zur Beförderung des Briefes. Für die oben genannte Thermotransfer-Frankiermaschine wurde in US 5,606,508 (DE 42 13 278 B1) und in US 5,490,077 eine Dateneingabemöglichkeit mittels Chipkarten vorgeschlagen. Eine der Chipkarten lädt neue Daten in die Frankiermaschine und ein Satz an weiteren Chipkarten gestattet durch das Stecken einer Chipkarte eine Einstellung entsprechend eingespeicherter Daten vorzunehmen. Das Datenladen und die Einstellung der Frankiermaschine sollen damit bequemer und schneller als per Tastatureingabe möglich sein. Die Tastatur der Frankiermaschine bleibt klein und übersichtlich, weil keine zusätzlichen Tasten erforderlich sind, um zusätzliche Funktionen zu laden oder einzustellen. Auf der Rückseite der Frankiermaschine befindet sich ein Einsteckschlitz einer Chipkarten-Schreib/Leseeinheit, in welchen die jeweilige Chipkarte vom Kunden innerhalb eines Zeitfensters eingesteckt werden soll. Wegen des mangelnden unmittelbaren Sichtkontaktes gelingt es einem ungeübten Benutzer nicht immer sofort hintereinander die erforderlichen Chipkarten einzustecken, was dann zu unerwünschten Verzögerungen führt. Gut zugänglich ist der Einsteckschlitz einer Chipkarten-Schreib/Leseeinheit nur dann, wenn der Benutzer sich über die Maschine beugt. Bei größeren Maschinen wachsen die Probleme, um den Blickkontakt herzustellen. Oft verfügt der Benutzer über eine Vielzahl an weiteren einsteckbaren Chipkarten. Eine Chipkartenart, beispielsweise Telefonkarten, Kreditkarten u.a., werden von der Frankiermaschine zwar aufgenommen aber nicht akzeptiert. Ohne Sichtkontakt ist der Irrtum aber nicht sofort offensichtlich. Die Frankiermaschine arbeitet nur mit relativ teuren Chipkarten, welche selbst mit einem Mikroprozessor ausgestattet sind und somit in der Lage sind zu prüfen, ob die Frankiermaschine ein gültiges Datenwort zur Chipkarte übermittelt, bevor eine Antwort an die Frankiermaschine gesendet wird. Erfolgt aber keine Antwort bzw.

Benutzeridentifikation, wird dies als Fehler in der Frankiermaschine registriert und angezeigt, bevor eine Aufforderung in der Anzeige angezeigt wird, die Chipkarte zu entfernen. Einerseits erscheint es unangemessen eine irrtümlich eingesteckte andere Karte, beispielsweise eine Telefonkarte, als Betrugsversuch zu registrieren. Andererseits erscheint es als eine zu hohe Sicherheitsanforderung die Nachladekarte für Portotarife für jede Frankiermaschine personalisiert auszuliefern. Dies hat einen relativ hohen Verwaltungsaufwand auf der Herstellerseite zur Folge.

Ein modifizierter Vorschlag für Waagen wurde schon in US 5,710,706 unterbreitet. Hierbei wird die Chipkarten-Schreib/Leseeinheit der Frankiermaschine einfach mitbenutzt, um neue Portogebührentabellen in die entsprechenden nichtflüchtigen Speicher der Waage zu laden. Hierbei können auch die unterschiedlichen Tarifstrukturen und Tarife von weiteren Postbeförderern geladen werden. Da der auf einer Chipkarte verfügbare Speicherplatz nur begrenzt vorhandenen ist, werden alle erforderlichen Daten sequentiell mittels einer Reihe an aufeinanderfolgend zu steckenden Chipkarten über die Frankiermaschine in die Waage geladen.

Als alternativer Weg zur Lösung des vorgenannten Problems, wonach der auf einer Chipkarte verfügbare Speicherplatz nur begrenzt vorhandenen ist, wird in der US 4 802 218 vorgeschlagen, mehrere Chipkarten gleichzeitig zu verwenden, die in eine Vielzahl an Schreib-Leseeinheiten eingesteckt sind. Neben einer USER-Chipkarte für die Guthaben und für die Abrechnung, wobei der zu druckende Portogebührenwert vom Guthaben subtrahiert wird, ist auch eine Masterkarte und eine weitere Rate-Chipkarte mit einer gespeicherten Portogebührentabelle gleichzeitig eingesteckt. Durch den Zugriff auf eine Portogebührentabelle, kann entsprechend dem eingegebenen Gewicht und Versandziel ein Portogebührenwert ermittelt werden, ohne eine ganze Tabelle in die Maschine zu laden. Da aber zu jeder Chipkarte je eine Schreib-Leseeinheit erforderlich ist, wird das Gerät zu groß und teuer. Außerdem ist ein separates Wiederauflade-Terminal erforderlich, um das Guthaben in der USER-Chipkarte wieder aufzufüllen, wobei zu dieser Wiederauflade-Funktion eine Masterkarte berechtigt. Eine Super-Visor-Karte hat Zugriff auf alle Masterkarten. Verschiedene Sicherheitslevel werden durch zugehörige Schlüsselcodes erschlossen. Ein solches System mit mehreren Slots für Chipkarten ist insgesamt sehr aufwendig.

In der DE 196 05 015 C1 ist bereits eine Ausführung für eine Druckvorrichtung (JetMail®) vorgeschlagen worden, die bei einem nichtwaagerechten annähernd vertikalen Brieftransport einen Frankierdruck mittels einem hinter einer Führungsplatte in einer Ausnehmung stationär angeordneten Tintenstrahldruckkopf durchführt. Ein Drucksensor ist zur Briefanfangserkennung kurz vor der Ausnehmung für den Tintenstrahldruckkopf angeordnet und wirkt mit einem Inkrementalgeber zusammen. Durch die auf dem Transportband angeordneten Andruckelemente ist der Brieftransport schlupffrei und das während des Transportes abgeleitete Inkrementalgebersignal beeinflußt die Druckbildqualität positiv. Eine solche Maschine kann mit intergrierter Waage oder für größere Poststücke mit einer externen Waage arbeiten. Bei einer solchen Frankiermaschine, die höhere Abmaße aufweist, muß eine Chipkarten-Schreib/Leseeinheit so angeordnet und betrieben werden, daß mit sequentiell einsteckbaren Chipkarten problemlos gearbeitet werden kann. Dies ist insbesondere auch dann angebracht, wenn der Umfang der Änderungsdaten zu groß für nur eine Chipkarte ist bzw. wenn eine für einen solchen Datenumfang angepaßte Chipkarte teuerer wäre, als mehrere preisgünstige Chipkarten mit kleinem Datenumfang.

Die Chipkarten werden üblicherweise vom Chipkartenhersteller und Frankiermaschinenhersteller initialisiert. Es ist jedoch für den Frankiermaschinenhersteller aufwendig, dabei spezielle Kunden-Chipkarten zu erzeugen. Eine den geltenden Tarifen angepaßte Information betreff der Portogebühren muß dem einzelnen Benutzer einer Frankiermaschine zwar mitgeteilt werden, betrifft aber alle Benutzer von Frankiermaschinen. Eine nichtpersonalisierte Chipkarte hätte den Vorteil einer auch kurzfristig durchführbaren Massenproduktion unmittelbar vor einer Tarifänderung. Bei einer frei verkäuflichen nichtpersonalisierten Nachladekarte besteht jedoch die Möglichkeit, daß Benutzer von Frankiermaschinen die Nachladeinformation von anderen Benutzern erhalten haben, ohne den wirklichen Dienstleister adäquat zu vergüten. Einerseits kann eine Abnahmepflicht von Nachladekarten nicht durchgesetzt werden, weil dem Benutzer zugemutet würde, auch solche Informationen zu kaufen, die er gar nicht braucht. Das ist insbesonders der Fall, wenn die Nachladeinformation nur in Details geändert wurde, welche nicht für alle Benutzer relevant sind. Schließlich ist es auch technisch unnötig nur wegen einiger geänderter Details eine ganze Tabelle auszutauschen. Andererseits existieren bereits handelsübliche Programmiergeräte, mit welchen Chipkarten gebrannt werden können. Schließlich wäre eine Datenbank mit teuerer Datenbankpflege nur deswegen erforderlich, um einen Mißbrauch zu verhindern.

Für einige spezielle Chipkartenanwendungen besteht nur ein stark abgeschwächtes Sicherheitsinteresse zum Schutz bzw. der Verwertung der auf der Chipkarte vorhandenen Daten. So ist grundsätzlich für jede Anwendung eine Abschätzung des Angreiferpotentials bzw. der Angreiferklassen erforderlich, um mit geeigneten, vom Aufwand her angemessenen, Maßnahmen den erwünschten Sicherheitslevel zu erreichen. Dabei gilt das Motto: "so viel wie nötig, so wenig wie möglich". Eine eingeschriebene Frankiermaschinen-Benutzungs-Nummer würde einem Angreifer zu offensichtlich die Benutzerkennung offenbaren. Somit muß eine gewisse Hemmschwelle für Raubkopierer aufgebaut werden.

Chipkarten haben oft nur einen stark begrenzten Speicherplatz. Das gilt insbesondere für die preiswerten Chipkarten. So sind Speicherkarten üblicherweise nur mit einigen hundert Bit's an Speichergröße ausgeführt. Dieser Speicherplatz reicht nicht aus, um tarifspezifische Daten im gesamten Umfang aufzunehmen. Zum Schutz von Dateninhalten und unbefugter Verwendung von Chipkarten gibt es zahlreiche Sicherungsverfahren, die zum Teil auf zugriffsgeschützten physikalischen Bereichen der Chipkarten und zum Teil auf unterschiedlichen kryptografischen Sicherungs-Algorithmen beruhen. Nachteil dieser Verfahren ist, daß ein hoher Initialisierungsaufwand z. B. zur Individualisierung der Karten mittels PIN-Vergabe oder zur Schlüsselverwaltung bei kryptografischen Verfahren getrieben werden muß. Bekannte Sicherungsverfahren sind ungeeignet, insofern sie viel zusätzlichen Speicherplatz auf der Chipkarte erfordern. Das Löschen der Daten auf der Chipkarte nach derer einmaligen Benutzung, erfordert zwar keinen zusätzlichen Speicherplatz auf der Chipkarte, muß aber dennoch außer Betracht bleiben, weil das Verfahren eine wiederholte Benutzung der Nachladekarte an derselben Frankiermaschine ausschließen würde. Eine erneute Benutzung der Nachladekarte an derselben Frankiermaschine ist im Fehlerfall zum Recovering erforderlich, wenn die betreffenden Daten in der Frankiermaschine verlohren gegangen sind und wiederhergestellt werden müssen. Eine wiederholte Benutzung der Nachladekarte an derselben Frankiermaschine kann bei Bedarf zum Zwecke einer Vordatierung von Post erforderlich werden, insbesondere wenn in der Zeitspanne zwischen normaldatierter Post und vordatierter Post ein Tarifwechsel gültig wird.

Bei der Vordatierung von Post auf ein zukünftiges Datum, welche durch einen ausgewählten Postbeförderer befördert werden soll, wird Post bereits mehrere Wochen oder Tage vor einer Beförderung massenhaft frankiert und bis zum Beförderungstermin in einem Vorratslager gelagert. Eine entsprechende befördererbezogene Chipkarte lädt befördererbezogene Nachladedaten in die Frankiermaschine. Nach Beendigung der einen Frankieraufgabe ist eine neue Frankieraufgabe zu erledigen. Zu diesem Zweck kann eine andere befördererbezogene Chipkarte befördererbezogene Nachladedaten in die Frankiermaschine laden. Weil die Frankiermaschine nicht alle Daten aller Beförderer laden und vorrätig halten kann, wird eine wiederholte Benutzung der Nachladekarte erforderlich, um eine vordatierte Postbearbeitung im Wechsel durchzuführen.

Der Erfindung liegt die Aufgabe zugrunde, ein betrugssicheres Verfahren und eine Frankiermaschine mit einer Chipkarten-Schreib/Leseeinheit zum Nachladen tariflicher Änderungsdaten per Chipkarte in eine Frankiermaschine oder in eine Waage zu schaffen. Einerseits sollen eine gut zugängliche Chipkarten-Schreib/Leseeinheit und eine zugehörige Steuerung in der Frankiermaschine eingesetzt und dem Benutzer ein Satz an unpersonalisierten Chipkarten zur Verfügung gestellt werden, die eine Nachladung von Informationen zur Ausführung von Frankiermaschinenfunktionen bzw. für deren kombinierte Anwendung so oft, wie erforderlich, erlauben. Andererseits soll bei Weitergabe der gebrauchten Chipkarte ein Schutz vor Mehrfachverwendung ein und derselben Chipkarte in anderen Frankiermaschinen geschaffen werden.

Die Aufgabe wird mit den Merkmalen der Ansprüche 1 und 4 gelöst.

Erfindungsgemäß verändert ein postalisches Gerät, insbesondere eine Frankiermaschine, vor der Verwertung der auf einer ersten Chipkarte gespeicherten Daten dieselben Daten mit Hilfe eines bestimmten Krypto-Algorithmus und eines eigenen geräte-spezifischen ersten Schlüssels derart, daß nur noch mit Hilfe eben dieses Schlüssels die Daten dekryptifiziert werden können. Die Nutzdaten sind in einem ersten Speicherbereich der vorgenannten Chipkarte gespeichert und umfassen die Restnutzdaten und veränderliche Daten bzw. nach der Erstbenutzung einen Krypto-Code. Eine wiederholt genutzte Chipkarte liefert brauchbare Daten nur für dasselbe Gerät, welches bei erstmaligen Einstecken der unpersonalisierten Chipkarte deren Personalisierung durchgeführt hat.

Es ist vorgesehen, daß im Falle eines erneuten Datenladens aus der ersten Chipkarte in das postalische Gerät, insbesondere in die Frankiermaschine, auch ein zusätzliches Einschreiben von in vorbestimmter Weise in das postalische Gerät, insbesondere in der Frankiermaschine, veränderten Daten in die Chipkarte im Ergebnis des Nachladens durchgeführt wird.

Es ist weiterhin vorgesehen, daß sich bei einer wiederholten Benutzung der ersten Chipkarte die veränderten Daten in Abhängigkeit von der Anzahl der Benutzungen unterscheiden, wobei ein erneutes Datenladen in das postalische Gerät, insbesondere in die Frankiermaschine, und ein zusätzliches Einschreiben von in anderer vorbestimmter Weise in dem postalischen Gerät, insbesondere in der Frankiermaschine, veränderten Daten in die Chipkarte erfolgt. Die Veränderung wirkt sich nur auf die Form der Daten und deren Speicherung in Speicherplätze aus. Sie wirkt sich aber nicht auf den Inhalt der jederzeit nachladbaren Information aus. Die ursprüngliche Information kann von dem postalischen Gerät unabhängig von der verschlüsselten/oder unverschlüsselten Form wieder rekonstruiert werden. Die Art und Weise der Veränderung wird vom gespeicherten Programm vorbestimmt. Vorzugsweise wird ein reversibler Verschlüsselungsalgorithmus benutzt, wie beispielsweise DES (Data Encryption Standard).

Alternativ können Teildaten derselben oder mindestens abgeleitete Funktionen aus diesen Daten oder Teildaten in vorbestimmter Weise verändert werden, um diese dann als Code in einem Speicherbereich wieder einzuschreiben.

Das Schreiben eines auf Ausgangsdaten basierenden Codes in die Chipkarte kann bei deren wiederholten Einstecken zusätzlich zum Zweck der Verifizierung der Authentizität der Chipkartendaten verwendet werden, bevor die Chipkartendaten frankiermaschinenintern ein weiteres mal verwendet werden. In einem zweiten Speicherbereich der Chipkarte ist zur Autorisation der Nutzdaten ein Code bzw. nach der Erstbenutzung ein anderer Code gespeichert. Ein zweiter Schlüssel ist in versteckter Form in der Chipkarte gespeichert. In allen Frankiermaschinen wird ebenfalls ein gleicher zweiter Schlüssel auslesegesichert gespeichert. Beispielsweise kann der zweite Schlüssel mit der Daten-Checksumme in vorbestimmter Art verwürfelt oder funktionell verknüpft sein, so daß mit jeder neuen Tariftabelle auch der Schlüssel ein anderes Erscheinungsbild bekommt. In jeder Frankiermaschine existiert ein dritter Schlüssel, welcher zum zweiten Schlüssel ein vorbestimmtes Verhältnis hat.

Erfindungsgemäß wird dieser zweite Schlüssel - ähnlich einem rekursiven Verfahren - durch den dritten Schlüssel mit kodiert, wodurch der Überprüfungsvorgang zur Authentizität in gesicherter (Frankiermaschinen-) Geräteumgebung abläuft, ohne daß der zweite Schlüssel bei dem Vorgang die Frankiermaschine verläßt oder dessen Tarnung aufgehoben wird. Geräte-intern erfolgt nun nach Dekodierung der Daten, oder Datenteile oder Datenfunktionen die Verifikation der Datenauthentizität mindestens aufgrund der Überprüfung eines vorbestimmten Verhältnisses zwischen dem versteckten zweiten Schlüssel der Chipkarte und dem dritten Schlüssel der Frankiermaschine. Zusätzlich kann auch die über die uncodierten Chipkartendaten gebildete Checksumme in mit dem zweiten Schlüssel in vorbestimmter Weise modifizierter Form zur Authentizitätsprüfung herangezogen werden. Das erfordert eine verschachtelte Prüfung gegenseitig abhängiger Daten, die ein vorbestimmtes Verhältnis zueinander haben. Nach Benutzung der Chipkarte verbleiben die Daten erfindungsgemäß in einer durch den ersten frankiermaschinen-spezifischen Schlüssel modifizierten Form, was bei einer weiteren Benutzung der Chipkarte an einer anderen Frankiermaschine einerseits eine sinnvolle Datennutzung ausschließt und andererseits beim Versuch zur Sperrung der Chipkarte bzw. der Frankiermaschine führt.

Die Erfindung schafft insbesondere ein Chipkarten/Frankiermaschinen-System, so daß ein automatisches Nachladen einer Frankiermaschine einerseits nach dem Einstecken einer hinsichtlich ihres Types erkennbaren Nachlade-Chipkarte in eine Chipkarten-Schreib/Leseeinheit erreicht werden kann, ohne daß dieselbe Chipkarte nach dem Einstecken in eine Chipkarten-Schreib/Leseeinheit einer anderen Frankiermaschine dort ebenfalls ein Nachladen verursacht. Es ist vorgesehen, daß der Krypto-Code in der Frankiermaschine errechnet und in die Chipkarte eingeschrieben wird, so daß die Chipkarte nur noch für dieselbe Frankiermaschine brauchbare Daten liefert. Es ist weiterhin vorgesehen, daß ein MAC-Sicherungsverfahren eingesetzt wird, welches wenig Speicherplatz auf der Chipkarte erfordert und dennoch die Authentizität der Chipkartendaten maschinell zu überprüfen gestattet.
Das Chipkarten/Frankiermaschinen-System ist vorteilhaft beliebig erweiterbar bzw. modifizierbar. Ein anderer eingesteckter Chipkartentyp kann von der Frankiermaschine erkannt und entsprechend ausgewertet werden. Die Frankiermaschine kann somit vorteilhaft mit einem möglichst preiswerten Chipkartentyp je Anwendungsart betrieben werden.

Eine hinter der Führungsplatte angeordnete Chipkarten-Schreib/Leseeinheit ist auch ausreichend gut zugänglich. Beim Einsteckvorgang ist die Chipkarte gut sichtbar und der Typ der gerade einzusteckenden Chipkarte kann somit auch vom Benutzer leicht anhand einer entsprechenden Kennzeichnung ermittelt werden.
Für eine Daten-Update-Anwendung im Frankiermaschinenbereich kann zum einen eine Auslieferung von inhaltsidentischen unpersonalisierten Chipkarten als Massenware erfolgen, wobei es dem Auslieferer obliegt, Maßnahmen zum Schutz der originären Chipkarten vor unerlaubten Kopierens bis zum ersten Nachladen zu treffen. Eine gewisse Hemmschwelle für Raubkopierer wird weiterhin dadurch aufgebaut, daß ein spezieller, insbesondere seltener und damit schwer beschaffbarer, Kartentyp zum Einsatz kommt. Zum anderen ist jedoch sichergestellt, daß nach erstmaliger Benutzung der Karte durch eine Frankiermaschine dieselbe nur noch an diesem spezifischen Gerät verwendet werden kann und daß eine Datennutzung an anderen Frankiermaschinen nicht mehr möglich ist. Die Weitergabe des Dateninhaltes einer einmalig zum Nachladen bereits benutzten Chipkarte zur Mehrfachnutzung an anderen Frankiermaschinen wird somit unterbunden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

| | |
|---|---|
| Figur 1a, | Details der Speicherbereiche der unpersonalisierten Chipkarte, |
| Figur 1b, | Satz an Chipkarten unterschiedlichen Typs, |
| Figur 2, | Blockschaltbild der Frankiermaschine, |
| Figur 3, | Perspektivische Ansicht der Frankiermaschine von hinten, |
| Figur 4a, | Darstellung der Datenstruktur vor der erstmaligen Nachladung, |
| Figur 4b, | Darstellung der Datenstruktur nach der erstmaligen Nachladung, |
| Figur 5a, b, | Ablaufplan für eine Steuerung durch den Mikroprozessor beim Datennachladen mittels einer Chipkarte, |

In der Figur 1a ist eine Chipkarte 49 mit Kontaktfeld dargestellt. Unter letzterem befindet sich bekanntlich der Speicherchip, dessen Speicherbereich in ungeschützte und geschützte Bereiche aufgeteilt ist. Die Nutzdaten sind im ungeschützten Bereich und ein Message Authentification Code MAC ist im geschützten Bereich gespeichert. Diese Chipkarte 49 gehört zum Typ b. Es sind weitere Chipkarten die zu anderen Typen gehören für die Anwendung im postalischen Gerät, insbesondere in einer Frankiermaschine, vorgesehen. Die Frankiermaschine wird deshalb ausgestattet mit einer entsprechenden Chipkarten-Schreib/Leseeinheit für eine Vielzahl an Typen geliefert.

Das Verfahren zum Nachladen von Änderungsdaten per Chipkarte in eine Frankiermaschine, beginnt mit einem erstmaligen Einstecken einer ersten Chipkarte 49 in eine Chipkarten-Schreib/Leseeinheit, automatischer Typerkennung und Nachladen von Nutzdaten aus der ersten Chipkarte 49 in die Frankiermaschine. In der Frankiermaschine erfolgt ein Verändern von Daten aus den geladenen Nutzdaten in vorbestimmter Weise. Im Ergebnis des ersten Nachladens erfolgt ein Einschreiben von in vorbestimmter Weise in der Frankiermaschine veränderten Daten in die Chipkarte 49. Beim Einstecken einer zweiten Chipkarte 47 in die Chipkarten-Schreib/Leseeinheit erfolgt nach automatischer Typerkennung ebenfalls ein Nachladen von Daten aus der zweiten Chipkarte 47 in die Frankiermaschine. Dabei werden teilweise Daten überschrieben oder gelöscht. Das hat folgenden Hintergrund: Die Postbehörde kann die breite Palette an Leistungen selbst erbringen oder Subunternehmen bzw. private Postbeförderer beauftragen, eine Beförderung von Post, beispielsweise Kurierpost, vorzunehmen. Die Postabholung und/ oder deren Eil-Zustellung erfolgt nun durch das Subunternehmen, das folglich auch eine Vergütung nach eigenen Tarifen für diese spezielle Dienstleistung verlangt. Die Postsendungen können bei Nachladung des Postbefördererkennzeichens und der entsprechenden Portogebühren des Subunternehmens bzw. privaten Postbeförderers dann weiterhin mit Frankiermaschinen freigestempelt werden.

Die vorgenannte erste Chipkarte 49 enthält für alle übrigen Postbefördererleistungen die Portogebühren entsprechend des Tarifs der Postbehörde und ein Postbefördererkennzeichen. Beim später wiederholten Einstecken der ersten Chipkarte 49 erfolgt eine automatische Typerkennung und ein Datenladen von der Chipkarte 49 in die Frankiermaschine. Die Nachladung betrifft die Gebühren gemäß des gültigen Tarifes für diese spezielle Dienstleistung des Postbeförderers und sie betrifft Daten oder die Nummer des Postbefördererkennzeichens. Somit können die urspünglichen Daten rekonstruiert werden, um anschließend wieder so, wie zu Beginn, mit der Frankiermaschine mit dem Stempelbild und entsprechend des Tarifs der Postbehörde die Poststücke freizustempeln. Solche Poststücke können weiterhin in jedem Postamt aufgegeben werden. Bei diesem später wiederholten Einstecken ist wieder ein anschließendes Einschreiben von in vorbestimmter Weise in der Frankiermaschine veränderten Daten in die Chipkarte vorgesehen, welche infolge dessen weiterhin nur für dieselbe Frankiermaschine brauchbare Daten liefert.

Für jeden Chipkartentyp ist mindestens eine Anwendung von möglichen Betriebsfunktionen einer Frankiermaschine vorgesehen und der Mikroprozessor ist programmiert, die Anwendungsart am Chipkartentyp zu unterscheiden. Für eine Anzahl von Chipkarten vom Typ a besteht eine hierarchische Struktur, die - wie in der Figur 1b gezeigt wird - ausgehend von einer ersten Chipkarte vom Frankiermaschinenbenutzer beliebig erweiter- und änderbar ist. Die erste Chipkarte 50 steht auf der obersten Hierarchiestufe und wird nachfolgend mit Master-Karte bezeichnet. Die in der Gruppe 51 bezeichneten zweiten Chipkarten stehen auf der ersten Hierarchiestufe, die in der Gruppe 52 bezeichneten weiteren Chipkarten stehen auf der zweiten Hierarchiestufe, die in der Gruppe 53 bezeichneten nachfolgenden Chipkarten stehen auf der dritten Hierarchiestufe, u.s.w., wobei solche Karten aus diesen Gruppen von Chipkarten auch als Folge-Karten bezeichnet werden, für welche stufenweise die Funktionenanwendungsberechtigung in wählbarer Weise limitiert und tabellarisch gespeichert ist. Die Karten der untersten Hierarchiestufe sind im Funktionenanwendungsumfang am weitesten beschränkt. Jede Karte enthält eine fortlaufende Nummer zu der in der Frankiermaschine Funktionenanwendungsprogramme gespeichert sind, wobei die Zuordnung für den autorisierten Benutzer frei programmierbar ist. Der Schutz der Karten vor Auslesen der fortlaufenden Nummer ist in bekannter Weise durch PIN oder andere Sicherheitsalgorithmen möglich. Bei Verlust der Master-Karte ist nur über eine Information des Frankiermaschinenherstellers und bei entsprechenden Nachweis der Authentizität ein Ersatz möglich. Das Sperren bzw. die Freigabe aller anderen Karten ist durch die Master-Karte möglich. Eine weitere Sicherheit bei der Initialisierung des Systems mit Hilfe der Master-Karte ist dadurch möglich, daß nur physisch vorhandene Karten initialisierbar sind, dadurch werden die geheimen fortlaufenden Nummern der Karten geschützt. Bei einem Folgekarten-Verlust kann ein Sperren des entsprechenden Speicherbereiches in der Frankiermaschine erfolgen.

Die Chipkarten vom Typ b dienen zum Nachladen von Tabellendaten, insbesondere von tariflichen Änderungsdaten. Eine Chipkarte 49 kann die gegenwärtig gültige Version und eine Chipkarte 48 kann vorbestimmte Änderungsdaten für eine zukünftig gültige Version einer Portogebührentabelle enthalten. Die zukünftig gültige Version kann beim Frankieren von Poststücken zur Erzeugung von vordatierten Poststücken erforderlich werden. Danach kann die Änderung mittels der Chipkarte 48 durch Laden mittels der Chipkarte 49 wieder rückgängig gemacht werden. In vorteilhafter Weise muß somit der Speicherplatz in der Frankiermaschine für Portogebührentabellen nicht erweitert werden, sondern kann auf eine optimale Größe beschränkt bleiben. Das ist besonders für eine MultiCarrier-Frankiermaschine vorteilhaft, welche die Tarife von mehreren Postbeförderen zur Verfügung haben bzw. berücksichtigen soll. Dafür existieren weitere Chipkarten 47, mit Daten entsprechend der anderen Tarifstruktur anderer Postbeförderer usw. zum befördererbezogenen Nachladen tariflicher Änderungsdaten.

Erfindungsgemäß ist das postalische Gerät, insbesondere eine Frankiermaschine, mit einer Chipkarten-Schreib/Leseeinheit 70 zum Nachladen von Änderungsdaten per Chipkarte und mit einer Druckeinrichtung 20, welche von einer Steuereinrichtung 1 gesteuert wird, ausgestattet.

Eine in einen Einsteckschlitz 72 der Chipkarten-Schreib/Leseeinheit 70 eingesteckte erste Chipkarte 49 gestattet ein Nachladen eines Datensatzes CK in die Frankiermaschine für mindestens eine Anwendung. Die Steuereinrichtung 1 weist ein mit einem Mikroprozessor 91 mit zugehörigen Speichern 92, 93, 94, 95 ausgestattetes Steuergerät 90 auf.

Der Programmspeicher 92 enthält das Betriebsprogramm und wenigstens sicherheitsrelevante Bestandteile des Programms für die vorbestimmte Form-Änderung eines Teils der Nutzdaten. Der Arbeitsspeicher RAM 93 dient zur flüchtigen Zwischen-speicherung von Zwischenergebnissen. Der Uhren/datumsbaustein enthält ebenfalls adressierbare aber nichtflüchtige Speicherbereiche nichtflüchtigen Zwischenspeicherung von Zwischenergebnissen oder auch bekannten Programmteilen (beispielsweise für den DES-Algorithmus). Es ist vorgesehen, daß das Steuergerät 90 der Frankiermaschine mit der Chipkarten-Schreib/Leseeinheit 70 verbunden ist, wobei der Mikroprozessor 91 des Steuergerätes 90 programmiert ist,

a) auf erste und zweite Speicherbereiche C1 und C2 des nichtflüchtigen Speichers 94, 95 des Steuergerätes 90 zuzugreifen, in welchen der aus der Chipkarte geladene Datensatz CK und der neu in die Chipkarte zu ladende Datensatz CK' gespeichert wird,

b) eine spezielle Rechenoperation oder Maske auf die im geladenen Datensatz CK enthaltenen Nutzdaten N anzuwenden, um eine Datenentnahme aus dem Speicherbereich C1 mit Abtrennung der vorbestimmten Nutzdaten N' von den Restnutzdaten N* vorzunehmen,

c) auf die Speicherbereiche C3 und C4 des nichtflüchtigen Speichers 94, 95 des Steuergerätes 90 zuzugreifen, in welchen mindestens ein erster Schlüssel K1 und ein Verschlüsselungsalgorithmus geschützt vor einem unautorisierten Auslesen gespeichert vorliegen,

d) die vorbestimmten Nutzdaten N' mit dem ersten Schlüssel K1 zu einem Krypto-Code KC zu verschlüsseln und im zweiten Speicherbereich C2 zu speichern und unter Verwendung der Restnutzdaten N* den neuen Datensatz CK' zu bilden,

e) den gebildeten neuen Datensatz CK' in die Chipkarte zu laden sowie

f) die Nutzdaten N aus dem Speicherbereich C1 zu deren Anwendung in entsprechende Speicherbereiche zu laden.

Es ist weiterhin vorgesehen, daß der Mikroprozessor programmiert ist, die Anwendungen am Chipkartentyp zu unterscheiden, wobei für jeden Chipkartentyp mindestens eine Anwendung von möglichen Betriebsfunktionen einer Frankiermaschine vorgesehen ist. In einer erweiterten Ausführung ist der Mikroprozessor programmiert, zum Nachladen und zum Verändern von Daten N' aus den geladenen Nutzdaten N und zur Überprüfung der Autorisation der Nutzdaten, wobei die Nutzdaten in einem ersten Speicherbereich CC1 der Chipkarte gespeichert sind und die Restnutzdaten N* und veränderliche Daten N' bzw. nach der Erstbenutzung ein Krypto-Code KC umfassen, wobei in einem zweiten Speicherbereich CC2 der Chipkarte zur Autorisation der Nutzdaten ein Code MAC2 bzw. nach der Erstbenutzung ein anderer Code MAC1 gespeichert vorliegt. In den Speicherbereichen C3 und C4 des nichtflüchtigen Speichers 94, 95 des Steuergerätes 90 ist dazu ein dritter Schlüssel K3 und ein Verschlüsselungsalgorithmus geschützt vor einem unautorisierten Auslesen gespeichert. Der Krypto-Code KC wird in der Frankiermaschine errechnet und in die Chipkarte eingeschrieben, so daß die Chipkarte nur noch für dieselbe Frankiermaschine brauchbare Daten liefert.

Die Figur 2 zeigt ein Blockschaltbild zur Einstellung der Funktion der Frankiermaschine und zur Ansteuerung der Druckeinrichtung 20 mit einer Chipkarten-Schreib/Lese-Einheit 70 und mit der Steuereinrichtung 1 der Frankiermaschine. Die Steuereinrichtung 1 bildet das eigentliche Meter und umfaßt ein erstes Steuergerät 90, eine Tastatur 88 und eine Anzeigeeinheit 89 sowie einen ersten und zweiten anwendungsspezifischen Schaltkreis ASIC 87 und 97. Das erste Steuergerät 90 enthält einen ersten Mikroprozessor 91 und an sich bekannte Speichermittel 92, 93, 94 sowie einen Uhren/Datumsschaltkreis 95. Im nichtflüchtigen Speicher 94 sind Bereiche zur Speicherung der Abrechnungsdaten vorgesehen, die den Kostenstellen zugeordnet sind.

Der erste anwendungsspezifische Schaltkreis ASIC 87 bildet zusammen mit einem zweiten Mikroprozessor 85 und einem nichtflüchtigen Speicher 84 ein postalisches Sicherheitsmittel PSM 86. Das postalische Sicherheitsmittel PSM 86 wird von einem gesicherten Gehäuse umschlossen und weist eine schnelle serielle Schnittstelle zur Druckersteuerung 16 auf. Vor jedem Frankierabdruck erfolgt eine hardwaremäßige Abrechnung im ersten anwendungsspezifischen Schaltkreis ASIC 87. Die Abrechnung erfolgt unabhängig von Kostenstellen. Der zweite Mikroprozessor 85 enthält einen - nicht gezeigten - integrierten Festwertspeicher (internal ROM) mit dem speziellen Anwendungsprogramm, was für die Frankiermaschine von der Postbehörde bzw. vom jeweiligen Postbeförderer zugelassen ist. Das postalische Sicherheitsmittel PSM 86 kann so ausgeführt sein, wie in der europäischen Anmeldung EP 789 333 A3 näher beschrieben wurde.

Beide vorgenannten ASIC's sind über den parallelen μC-Bus mindestens mit dem Steuergerät 90 und der Anzeigeeinheit 89 verbunden. Der erste Mikroprozessor 91 weist vorzugsweise Anschlüsse für die Tastatur 88, eine serielle Schnittstelle SI-1 für den Anschluß der Chipkarten-Schreib/Lese-Einheit 70 und eine serielle Schnittstelle SI-2 für den optionalen Anschluß eines MODEMs auf. Mittels des MODEMs kann das im nichtflüchtigen Speicher 84 des postalischen Sicherheitsmittels PSM 86 gespeicherte Guthaben erhöht werden.

Es ist vorgesehen, daß der zweite ASIC 97 eine serielle Schnittstellenschaltung 98 zu einem im Poststrom vorschalteten Gerät 13, eine serielle Schnittstellenschaltung 96 zur Druckeinrichtung 20 und eine serielle Schnittstellenschaltung 99 zu einem der Druckeinrichtung 20 im Poststrom nachgeschalteten Gerät 18 aufweist. Der nicht vorveröffentlichten deutschen Anmeldung 197 11 997.2 ist eine Ausführungsvariante für die Peripherieschnittstelle entnehmbar, welche für mehrere Peripheriegeräte (Stationen) geeignet ist. Sie trägt den Titel: Anordnung zur Kommunikation zwischen einer Basisstation und weiteren Stationen einer Postbearbeitungsmaschine und zu deren Notabschaltung.

Die Schnittstellenschaltung 96 gekoppelt mit der in der Maschinenbasis befindlichen Schnittstellenschaltung 14 stellt mindestens eine Verbindung zu den Sensoren 6, 7, 17 und zu den Aktoren, beispielsweise zum Antriebsmotor 15 für die Walze 11 und zu einer Reinigungs- und Dichtstation RDS für den Tintenstrahldruckkopf 4, sowie zum Tintenstrahldruckkopf 4 der Maschinenbasis her. Die prinzipielle Anordnung und das Zusammenspiel zwischen Tintenstrahldruckkopf und der RDS sind der nicht vorveröffentlichten deutschen Anmeldung 197 26 642.8 entnehmbar, mit dem Titel: Anordnung zur Positionierung eines Tintenstrahldruckkopfes und einer Reinigungs- und Dichtvorrichtung.

Einer der in der Führungsplatte 2 angeordneten Sensoren 7, 17 ist der Sensor 17 und dient zur Vorbereitung der Druckauslösung beim Brieftransport. Der Sensor 7 dient zur Briefanfangserkennung zwecks Druckauslösung beim Brieftransport. Die Transporteinrichtung besteht aus einem Transportband 10 und zwei Walzen 11,11'. Eine der Walzen ist die mit einem Motor 15 ausgestattete Antriebswalze 11, eine andere ist die mitlaufende Spannwalze 11. Vorzugsweise ist die Antriebswalze 11 als Zahnwalze ausgeführt, entsprechend ist auch das Transportband 10 als Zahnriemen ausgeführt, was die eindeutige Kraftübertragung sichert. Ein Encoder 5, 6 ist mit einer der Walzen 11, 11' gekoppelt. Vorzugsweise sitzt die Antriebswalze 11 mit einem Inkrementalgeber 5 fest auf einer Achse. Der Inkrementalgeber 5 ist beispielsweise als Schlitzscheibe ausgeführt, die mit einer Lichtschranke 6 zusammen wirkt.

Es ist vorgesehen, daß die einzelnen Druckelemente des Druckkopfes innerhalb seines Gehäuses mit einer Druckkopfelektronik verbunden sind und daß der Druckkopf für einen rein elektronischen Druck ansteuerbar ist. Die Drucksteuerung erfolgt auf Basis der Wegsteuerung, wobei der gewählte Stempelversatz berücksichtigt wird, welcher per Tastatur 88 oder bei Bedarf per Chipkarte eingegeben und im Speicher NVM 94 nichtflüchtig gespeichert wird. Ein geplanter Abdruck ergibt sich somit aus Stempelversatz (ohne Drucken), dem Frankierdruckbild und gegebenfalls weiteren Druckbildern für Werbeklischee, Versandinformationen (Wahldrucke) und zusätzlichen editierbaren Mitteilungen. Der nichtflüchtige Speicher NVM 94 weist eine Vielzahl an Speicherbereichen auf. Darunter sind solche, welche die geladenen Portogebührentabellen nichtflüchtig speichern.

Die Chipkarten-Schreib/Leseeinheit 70 besteht aus einem zugehörigen mechanischen Träger für die Mikroprozessorkarte und Kontaktiereinheit 74. Letztere gestattet eine sichere mechanische Halterung der Chipkarte in Lese-Position und eindeutige Signalisierung des Erreichens der Leseposition der Chipkarte in der Kontaktierungseinheit, beispielsweise nach dem Push/Push-Prinzip taktil durch Druckpunkt signalisiert, Eject-Taste oder Display/Beeper-Meldung der Frankiermaschine, eine zuverlässige elektrische Kontaktierung von kontaktbehafteten Chipkarten gemäß ISO 7816 für mindestens 100.000 Kontaktierungszyklen sowie eine leichte Benutzbarkeit beim Stecken und Ziehen der Chipkarte. Die Mikroprozessorkarte mit dem Mikroprozessor 75 besitzt eine einprogrammierte Lesefähigkeit für alle Arten von Speicherkarten bzw. Chipkarten. Das Interface zur FM ist eine serielle Schnittstelle gemäß RS232-Standard. Die Datenübertragungsrate beträgt min. 1,2 K Baud. Eine Selbsttestfunktion mit Bereitschaftsmeldung wird nach Einschalten der Stromversorgung mittels Schalter 71 selbsttätig ausgeführt.

In der Figur 3 ist eine perspektivische Ansicht der Frankiermaschine von hinten dargestellt. Die Frankiermaschine ist mit einer Chipkarten-Schreib/Leseeinheit 70 ausgestattet, die hinter der Führungsplatte 2 angeordnet und von der Gehäuseoberkante 22 zugänglich ist. Nach dem Einschalten der Frankiermaschine mittels dem Schalter 71 wird eine Chipkarte 49 von oben nach unten in den Einsteckschlitz 72 eingesteckt. Ein zugeführter auf der Kante stehender Brief 3, der mit seiner zu bedruckenden Oberfläche an der Führungsplatte anliegt, wird dann entsprechend der Eingabedaten mit einem Frankierstempel 31 bedruckt. Die Briefzuführöffnung wird durch eine Klarsichtplatte 21 und die Führungsplatte 2 seitlich begrenzt.

Mit dem Einstecken einer Chipkarte 50 vom Typ a, die mit der Frankiermaschine zusammen ausgeliefert worden ist, wird eine vorbestimmte Kostenstelle eingestellt. Beispielsweise wird die Kostenstelle 1 voreingestellt, auf welche die Buchung erfolgt, wenn per Tastatur keine anderen vorbestimmten Eingaben getätigt werden, um den Zugriff auf andere Kostenstellen zu erlangen. Die Frankiermaschine enthält in ihrem Programmspeicher 92 ein entsprechendes Anwendungsprogramm, so daß eine in die Chipkarten-Schreib/Leseeinheit 70 eingesteckte Chipkarte 50 eine Einstellung der Frankiermaschine für mindestens eine Funktionsanwendung auf der höchsten Hierarchieebene gestattet. Eine derartige Chipkarte vom Typ a mit nur geringem Speicherplatz ist kostengünstig. Beispielsweise kann eine Speicherkarte mit 256 Byte nach ISO7816, insbesondere OMC240SP von der Firma Orga, verwendet werden.

Eine andere Chipkarte mit viel Speicherplatz wird nachfolgend mit Typ b bezeichnet. Beispielsweise kann eine $I^2C$Bus Speicherkarte mit 32 Kbyte nach ISO7816, insbesondere AM2C256 von der Firma AMMI, verwendet werden. Diese enthält einen Chip AT24C256 von der Firma Atmel. Weitere Chipkarten werden nachfolgend mit Typ n bezeichnet. Beispielsweise kann eine einen Mikroprozessor aufweisende Chipkarte mit 8 Kbyte verwendet werden. Die weiteren Chipkarten der Typen b bis n betreffen beispielsweise folgende Funktionsanwendungen:

- Nachlade-Möglichkeit der Portogebührentabellen über Chipkarte 49.
- Klischee-Nachladen über Chipkarten (einzeln oder im Block)
- Stempelbilder-Nachladen über Chipkarten (Tagesstempel).
- Chipkarten mit zeitlimitierter Funktionenanwendung.
- Chipkarten mit PIN-Autorisierung von Funktionen.
- Chipkarten zur Einstellung der Peripheriegerätefunktion.
- Chipkarten zur Einstellung der Systemkonfigurierung.
- Chipkarten zur Aktivierung programmierter Druckbilder.

In der Figur 4a erfolgt eine Darstellung der Datenstruktur im Zustand A der Datenspeicherung in den Speicherbereichen CC1 und CC2 der Chipkarte vor der erstmaligen Nachladung. Die im ungeschützten Bereich CC1 gespeicherten Nutzdaten N betreffen vorzugsweise eine Tariftabelle.

Ein Teil der Nutzdaten bleibt immer unverschlüsselt. Diese Daten werden nachfolgend als Restnutzdaten N* bezeichnet. Ein anderer Teil N' der Nutzdaten ist nur vor dem erstmaligen Nachladen unverschlüsselt. Dieser Teil wird anschließend beispeilsweise durch kodierte Daten oder einen Krypto-Code KC ersetzt, so daß sich hinsichtlich der Datenstruktur ein Zustand B gemäß Fig. 4b ergibt. Dabei werden durch ein Einschreiben eines neuen Datensatzes CK' in die Chipkarte die Daten im Speicherbereich CC1 der Chipkarte in vorbestimmter Weise verändert. Der neue Datensatz CK' schließt nun im Speicherbereich CC1 der Chipkarte einen Krypto-Code KC ein. Bei jedem wiederholten Datenladen liefert somit die Chipkarte nur noch dann brauchbare Daten, wenn sie in die Schreib/Lese-Einheit derselben Frankiermaschine eingesteckt ist.
Ein Message Authentification Code MAC2 ist im geschützten Speicherbereich CC2 der Chipkarte gespeichert und enthält einen mit einem zweiten Schlüssel K2 verschlüsselten Datenteil. Letzterer umfaßt die CRC-Checksumme ausgewählter Nutzdaten N' und den Code des zweiten Schlüssels K2, wobei CRC-Checksumme der ausgewählten Nutzdaten N' und der vorgenannte Message Authentification Code in vorbestimmter Weise mit einer geeigneten Rechenoperation verknüpft werden, die durch das Semikolon symbolisiert wird. Die zu einem Datensatz CK zusammengestellten Daten aus dem Chipkartenspeicherbereichen CC1 und CC2 der in den Einsteckschlitz 72 eingesteckten Chipkarte 49 werden geladen und bearbeitet, was anhand der Figuren 5a und b näher erläutert wird.

Der in der Figur 4b gezeigte Zustand B der Datenspeicherung eines neuen Datensatzes CK' in der Chipkarte betrifft eine nach der erstmaligen Nachladung neu in die Chipkarte geladene Datenstruktur, die in den bisherigen Chipkarten-speicherbereichen CC1, CC2 gespeichert ist. Die Rest-Nutzdaten N*, die im ersten Bereich CC1 gespeichert sind, betreffen vorzugsweise Teile einer Tariftabelle. Hinzu kommen verwürfelt eingefügte Datenteile. Beim Verwürfeln werden die mit einem ersten Schlüssel K1 zu einem Krypto-Code KC verschlüsselten Datenteile zwischen den Restnutzdaten versteckt. Sie sind also auf den Chipkartenspeicherbereich CC1 verteilt. Im geschützten Bereich CC2 ist neue Message Authentification Code MAC1 gespeichert. Letzterer wird durch Verschlüsseln des vorher gespeicherten Message Authentification Code MAC2 gebildet. Das Verschlüsseln erfolgt mit dem ersten Schlüssel K1 in der Frankiermaschine vor dem Laden und Speichern in der Chipkarte.

In der Figur 5a ist ein Ablaufplan für eine Steuerung durch den Mikroprozessor der Frankiermaschine beim Datennachladen mittels einer Chipkarte teilweise dargestellt.
Nach einem Einschalten eines - nicht dargestellten - Netzteiles der Frankiermaschine mit dem Schalter 71, was im Schritt 100 vom Mikroprozessor 91 der Frankiermaschine registriert wird, signalisiert ein mit einer Kontaktiereinrichtung 74 der Chipkarten-Schreib/Leseeinheit 70 verbundener Mikroprozessor 75 dem Mikroprozessor 91 der Frankiermaschine, wenn eine Chipkarte in den Einsteckschlitz 72 eingesteckt ist, was im Schritt 101 vom Mikroprozessor 91 der Frankiermaschine registriert wird. Zwischen der Chipkarten-Schreib/Leseeinheit 70 und der Chipkarte erfolgt dann eine Kommunikation nach einem ersten vorbestimmten Protokoll und eine Auswertung im Schritt 102, ob die Chipkarte als Typ a lesbar ist. Ist das der Fall, wird vom Abfrageschritt 103 auf einen Schritt 111 verzweigt, um einen Teil I eines Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird. Nach einer Zugangsberechtigungsprüfung werden dann die Anwendungen freigegeben (Schritte 111-121 und 125-127). Wenn aber die Chipkarte als Typ a nicht lesbar ist, wird vom Abfrageschritt 103 auf einen Schritt 104 verzweigt, um eine Kommunikation nach einem zweiten vorbestimmten Protokoll und eine Auswertung im Schritt 104, ob die Chipkarte als Typ b lesbar ist vorzunehmen. Ist also die Chipkarte als Typ b lesbar, wird vom Abfrageschritt 105 zur weiteren Datenverarbeitung durch den Mikroprozessor 91 der Frankiermaschine auf einen Schritt 106 verzweigt. In vergleichbarer Weise werden gegebenenfalls weitere Protokolle durchlaufen (Schritt 107), zur Feststellung im Abfrageschritt 108, ob die Chipkarte als Typ n lesbar ist, um dann zum Datenladen und zur weiteren Datenverarbeitung durch den Mikroprozessor 91 der Frankiermaschine auf einen entsprechenden Schritt 109 zu verzweigen. Anderenfalls, wenn der Typ der Chipkarte nicht erkannt wird, erfolgt nach einer Fehlermeldung im Schritt 110 eine Rückverzweigung auf den Schritt 101.

Gegenüber dem bisherigen Stand der Technik resultiert eine bessere Adaption an die jeweilige Anwendung. Dagegen gibt es bei der Lösung gemäß US 5,606,508 (DE 42 13 278 B1) oder US 5,490,077 keine Typenunterschiede, d.h. die Chipkarten sind alle technisch und funktionell gleich und ein Zeitfenster für das Einstecken einer Chipkarte ist eine unveränderliche feste Zeitperiode. Im Unterschied zum US 5,606,508 oder US 5,490,077, wobei bei letzteren die Reihenfolge festliegt und eine Chipkarte A zum Portogebührentabellenladen vor einer Chipkarte B gesteckt werden soll, welche beispielsweise eine Kostenstelle einstellt, ist nun erfindungsgemäß die Reihenfolge für das sequentielle Einstecken einer Anzahl von Chipkarten beliebig.

Der erfindungsgemäße Ablaufplan nach Fig.5a gestattet also der Frankiermaschine eine Unterscheidung nach verschiedenen Chipkarten-Typen vorzunehmen. Ein teurer Chipkarten-Typ muß somit nur in den Fällen eingesetzt werden, wo keine Alternative besteht. In vorteilhafter Weise wird ein entsprechend der Anwendungsart geeigneter Chipkarten-Typ gewählt.
Wenn die Datenverarbeitung durch den Mikroprozessor 91 der Frankiermaschine in der durch den Chipkarten-Typ vorbestimmten Art und Weise durchgeführt wird, werden Überwachungen nach bestimmten Kriterien vorgenommen und die ggf. vorkommenden Fehler angezeigt (Schritte 122-124, 128-130,154), bevor die Weiterbenutzung der Frankiermaschine unterbunden wird (Schritt 131).

Wenn vom Abfrageschritt 105 auf einen Schritt 106 verzweigt wird, kommt ein Chipkarten-Typ b zum Einsatz. Dieser ist dazu vorgesehen, um den in der Chipkarte 49 gespeicherten Datensatz CK in einen ersten Speicherbereich C1 des nichtflüchtigen Speichers 94 der Frankiermaschine zu laden. Der Datensatz CK läßt sich wie folgt darstellen:

$$CK := N; MAC2 \quad (1)$$

Der unverschlüsselte Teil des Datensatzes CK enthält die zu ladenden neuen Nutzdaten N. Der verschlüsselte Teil des Datensatzes CK ist ein Message Authentification Code MAC2, welcher ebenfalls in die Frankiermaschine geladen wird. Das Semikolon zwischen beiden in o.g. Gleichung (1) entspricht einer speziellen Verknüpfung. Nur im einfachsten Fall hängen beide Teile aneinander. Beispielsweise eine Frankiermaschine, welche von einem Schutzgehäuse umschlossen wird, hat im Speicherbereich C3 des nichtflüchtigen Speichers 94 einen dritten Schlüssel K3 gespeichert, welcher den Message Authentification Code entschlüsseln kann. Der Verschlüsselungsalgorithmus kann in einem weiteren Speicherbereich C4 des nichtflüchtigen Speichers 94 der geschützten Frankiermaschine gespeichert vorliegen. Der dritte Schlüssel K3 und der Verschlüsselungalgorithmus können auslesegesichert gespeichert sein. Der Mikroprozessor 91 ist vorzugsweise ein OTP-Typ (One Time Programmable).

In einer besonders sicheren Ausführungvariante sind der erste und dritte Schlüssel K1, K3 und der Verschlüsselungalgorithmus im nichtflüchtigen Speicher 84 des postalischen Sicherheitsmittels PSM 86 gespeichert. Die erforderlichen Rechenoperationen, wie Ver- und Entschlüsselung, nimmt im postalischen Sicherheitsmittel PSM der Mikroprozessor 85 vor. Dieser kann ebenfalls ein OTP-Typ (One Time Programmable) sein. Der Algorithmus und die Schlüssel können im OTP-internen Nurlesespeicher auslesesicher gespeichert sein.

Der weitere Ablauf ist in der Figur 5b dargestellt.
In einem ersten Schritt 141 wird ein Zähler zurückgesetzt Z:= 0. Der Zähler ist ein separater Rundenzählerbaustein oder wird in Speicherzellen vorzugsweise des Uhren/Datumsbausteins 95 realisiert, wobei die Speicherzellen miteinander entsprechend logisch verknüpft und programmierbar sind.

Im zweiten Schritt 142 werden die Nutzdaten N aus dem ersten Speicherbereich CC1 und ein verschlüsselter Datensatzteil aus dem zweiten Speicherbereich CC2 des Chipkartenspeichers entnommen. Ein entsprechendes Programm im Nurlesespeicher 92 steuert das Datenladen und die nachfolgenden weiteren Rechenoperationen. Der Zustand A der Speicherung von Daten in einer Chipkarte liegt nur vor dem erstmaligen Nachladen von Daten in die Frankiermaschine vor. Die Nutzdaten umfassen Restnutzdaten N* und spezielle Nutzdaten N' nach Gleichung (2):

$$N := N^* ; N' \quad (2)$$

Die entsprechend dem Programm vom Mikroprozessor ausgewählten speziellen Nutzdaten N' werden mit einem ersten Schlüssel K1 zum Krypto-Code KC verschlüsselt (3):

$$K1[N'] = KC \quad (3)$$

Der verschlüsselte Datensatzteil MAC2 ist vorzugsweise ein mit einem zweiten Schlüssel K2 verschlüsselter Datenteil M2 und wird wie in (4) geschrieben:

$$MAC2 := K2\,[M2] = K2\,[K2;\, CRC(N')] \quad (4)$$

Der verschlüsselte Datensatzteil MAC2 wird ebenfalls mit dem ersten Schlüssel K1 zu einem MAC1 verschlüsselt (5):

$$K1[MAC2] = MAC1 \quad (5)$$

Abschließend werden im zweiten Schritt 142 die Nutzdaten N und nach Gleichung (4) und (5) verschlüsselten Datensatzteile aus dem Speicherbereich C1 in einen Speicherbereich C2 des nichtflüchtigen Speichers 94 kopiert.

Im dritten Schritt 143 wird der Zählerstand des Rundenzählers inkrementiert, zu Z:= Z + 1.

Im vierten Schritt 144 wird mittels des in der Frankiermaschine gespeicherten dritten Schlüssels K3 im Rahmen eines reversiblen Verschlüsselungsverfahrens ein Entschlüsselungsversuch unternommen. Dazu wird aus dem Speicherbereich C1 der Datensatzteil MAC2 entnommen, der zuvor aus dem zweiten Chipkartenspeicherbereich geladen worden ist. Dieser Datensatzteil MAC2 gemäß Zustand A ist mit dem zweiten Schlüssel K2 verschlüsselt. Mit einem reversiblen dritten Schlüssel K3 kann der verschlüsselte Datensatzteil MAC2 zum entschlüsselten Datenteil M2 entschlüsselt werden. Der entschlüsselte Datensatzteil wird im Arbeitsspeicher RAM zwischengespeichert. Bei einem reversiblen Verschlüsselungsalgorithmus kann der zweite Schlüssel K2 identisch mit dem dritten Schlüssel K3 sein. Vorzugsweise wird ein geheimes Zwischenergebnis im OTP-internen Arbeitsspeicher RAM auslesesicher zwischengespeichert. Für den entschlüsselten Datenteil M2 ergibt sich (3) somit:

$$M2 := K2;\ CRC(N') \qquad (6)$$

Letzterer umfaßt die CRC-Checksumme speziell ausgewählter Nutzdaten N' und den Code des zweiten Schlüssels K2. Das Semikolon zwischen beiden steht für eine bestimmte Rechenoperation zur Verknüpfung beider. Der Mikroprozessor 91 bzw. 85 ist zur Durchführung vorgenannter Rechenoperation und zur Durchführung einer entsprechenden Umkehr-Rechenoperation programmiert.

Auf den unverschlüsselten Teil des gespeicherten Datensatzes CK im Speicherbereich C1 des nichtflüchtigen Speichers 94 der Frankiermaschine wird im fünften Schritt 145 zugegriffen. Dabei werden mittels einer Maske oder mittels der entsprechenden Rechenvorschrift vorbestimmte spezielle Nutzdaten N' ausgewählt sowie danach die ausgewählten Nutzdaten N' zu einer CRC-Checksumme verarbeitet.

Im sechsten Schritt 146 wird nun durch die entsprechende Umkehr-Rechenoperation die Checksumme CRC (N') vom Datenteil M2 abgetrennt. Beispielsweise kann zur Abtrennung die berechnete Checksumme CRC(N') vom Datenteil M2 subtrahiert werden, wenn im Datenteil M2 der zweite Schlüssel K2 und die urspüngliche Checksumme CRC(N') additiv verknüpft waren (7):

$$\begin{aligned} M2 - CRC(N') &= K \\ \{K2 + CRC(N')\} - CRC(N') &= K \qquad (7) \end{aligned}$$

Im siebenten Schritt 147 wird der verbleibende Rest K mit dem frankiermaschinen-intern gespeicherten dritten Schlüssel K3 verglichen. Dabei kann festgestellt werden, ob beide Schlüssel zueinander ein vorbestimmtes Verhältnis haben. Nur im einfachsten Fall wird auf Gleichheit geprüft (8):

$$K3 = K\ ? \qquad (8)$$

Ist vorbestimmtes Verhältnis festgestellt, im o.g. Fall ist also der Rest identisch mit dem zweiten Schlüssel K2 und gleich dem frankiermaschinen-intern gespeicherten Schlüssel K3, wird über Schritt 150 zum Schritt 151 verzweigt, um einen neuen Datensatz CK' zu bilden. Eine Chipkarte mit Daten im Zustand A (Fig.4a) konnte somit bereits im ersten Durchlauf im siebenten Schritt 147 erkannt werden.

Anderenfalls wird im achten Schritt 148 geprüft, ob der Zählerstand des Zähler schon den Wert zwei ereicht hat. Im ersten Durchlauf ist dies noch nicht der Fall. Zur Erzielung eines zweiten Durchlaufes wird dann über einen neunten Schritt 149, in welchem der Speicherinhalt des Speicherbereiches C1 gewechselt wird, zum vorgenannten zweiten Schritt 142 zurückverzweigt. Durch das Welchseln des Speicherinhaltes wird im Speicherbereich C1 ein Datenzustand erreicht so, als ob in der Chipkarte eine Datenstruktur gemäß dem - in der Figur 4a gezeigten - Zustand A der Datenspeicherung bestanden hätte und so, als ob der erste Durchlauf erst noch beginnt. Tatsächlich beginnt aber ein zweiter Durchlauf, was weiter unten noch genauer erläutert wird.

Wurde jedoch im ersten Durchlauf im siebenten Schritt 147 für eine gültige erstmalig eingesteckte Chipkarte bereits ein vorbestimmtes Verhältnis festgestellt, dann wird im Schritt 150 auf den zweiten internen Speicherbereich C2 zugegriffen, um den neuen Datensatz CK' zu bilden. Für den neuen Datensatz CK' gilt (9:

$$CK' := N^*;\ KC;\ MAC1 \qquad (9)$$

Dieser kann nun im Schritt 151 in die Chipkarte geladen, d.h. im Chipkarten-internen Speicher nichtflüchtig gespeichert werden und repräsentiert zugleich den Zustand B gemäß Fig.4b. Im Schritt 152 werden dann die Nutzdaten N aus dem ersten internen Speicherbereich C1 entsprechend dem jeweiligen Anwendungsfall in den Arbeitsspeicher oder in einen weiteren nichtflüchtigen Speicher der Frankiermaschine übernommen. Anschließend wird im Schritt 153 die Meldung über das erfolgreiche Updating abgegeben, beispielsweise in Form einer Anzeige oder durch einen Beeper signalisiert.

Der in Fig.4b gezeigte Zustand B liegt bei jedem weiteren Nachladen vor.

Der unverschlüsselte Teil des Datensatzes CK' enthält Rest-Nutzdaten N*, d.h. die neuen Nutzdaten N ohne die vorbestimmten Nutzdaten N'. Diese Rest-Nutzdaten N* werden durch verschlüsselte Nutzdaten des Krypto Codes KC ergänzt und dann zusammen im Speicherbereich CC1 der Chipkarte 49 gespeichert. Auf bestimmte Weise werden die verschlüsselten Nutzdaten des Krypto Codes KC verwürfelt in die Restnutzdaten eingefügt. Dafür wird eine spezielle Rechenoperation oder Maske benutzt. Die spezielle Rechenoperation wird im neuen Datensatz CK' wieder durch ein Semikolon symbolisiert und beispielsweise so ausgeführt, daß ein verwürfelter Datenteil entsteht. Die Restnutzdaten N* im neuen Datensatz CK' sind für ein Frankieren nach gültigen Portogebührentarifen zwar notwendig aber nicht hinreichend.

Somit muß beim nächsten Einstecken der Karte ein verwürfelter Datenteil entwürfelt werden, um den Krypto Code KC zu erhalten. Aus letzterem können dann die unverschlüsselten vorbestimmten Nutzdaten durch Entschlüsselung zurückgewonnen werden. Die unter Verwendung des ersten Schlüssels K1 durch Entschlüsseln des Krypto Codes KC zurückgewonnenen vorbestimmten Nutzdaten N' können nun in der Frankiermaschine gespeichert und entsprechend verwendet werden.

Der verschlüsselte Teil des neuen Datensatzes CK' enthält einen weiteren Message Authentification Code MAC1. Letzterer wird nach der ersten Benutzung der Karte im Speicherbereich CC2 gespeichert. Mittels dieser Message Authentification Code kann die Chipkarte in Verbindung mit dem Stand des Rundenzählers und mit der Authentizitätprüfung auch auf ein Vorliegen des Zustandes A oder B geprüft werden.

Bei einer eingesteckten Chipkarte mit einem Datensatz gemäß Zustand B werden im ersten Durchlauf nachfolgende Rechenoperationen durchgeführt. Im zweiten Schritt 142:

$$K1[KC] = N' \qquad (10)$$

$$K1[MAC1] = MAC2 \qquad (11)$$

mit Speicherung im Speicherbereich C2. Nach der Inkrementierung des Rundenzählers im dritten Schritt 144, werden folgende Rechenoperationen durchgeführt, im vierten Schritt 144:

$$K3[MAC1] = M1 \qquad (12)$$

Im fünften und sechten Schritt 145 und 146:

$$M1 - CRC(CK) = K \qquad (13)$$

Da im siebenten Schritt 147 kein vorbestimmtes Verhältnis zu K3 festgestellt wurde, werden für einen zweiten Durchlauf im neunten Schritt 149 die im Speicherbereich C2 gespeicherten Daten N*, N', MAC2 in den Speicherbereich C1 kopiert. Für den zweiten Durchlauf liegen also äquivalente Daten wie beim Zustand A vor und es werden nachfolgende Rechenoperationen durchgeführt. Im zweiten Schritt 142:

$$K1[N'] = KC \qquad (14)$$

$$K1[MAC2] = MAC1 \qquad (15)$$

mit Speicherung im Speicherbereich C2. Im vierten Schritt 144, aufgrund von Gleichung (6) und K3 reversibel zu K2 ergibt sich:

$$K3[MAC2] = M2 \qquad (16)$$

Im fünften und sechten Schritt 145 und 146:

$$M2\text{-}\ CRC(N') = K \qquad (17)$$

Im siebenten Schritt 147 wird nun ein vorbestimmtes Verhältnis des wertes K zu K3 festgestellt. In einer vereinfachten Ausführungsform wird die Gleichheit der Schlüssel K2 = K3 vorgesehen, dann ist K = K2 = K3. Somit kann also erst nach einer - in der ersten Runde - erfolgten Umwandlung des MAC1 in einen MAC2, in der zweiten Runde die Authentizität überprüft werden. Wird auch nach Durchlaufen der zweiten Runde, d.h. wieder im siebenten Schritt 147, die Authentizität nicht festgestellt und der Rundenzähler hat einen Zählstand = 2 erreicht, dann wird die Chipkarte als ungültig erkannt und es erfolgt im Schritt 154 eine Fehlermeldung: "ungültige Karte". Es ist somit vorgesehen, daß nach Durchlaufen von zwei Runden die Authentizität oder Nicht-Authentizität der Nutzdaten endgültig festgestellt werden kann. Die zweite Runde ist also bei einem in der Chipkarte vorliegenden Zustand B erforderlich, um im Schritt 142 erst den Code MAC1 und dann im Schritt 150 wieder den neuen Datensatz CK' bilden zu können, um im Schritt 151 letzteren in die Chipkarte laden zu können sowie um dann mit den in der ersten Runde im Schritt 142 aus dem Krypto-Code KC entschlüsselten und im Schritt 149 im ersten Speicherbereich C1 gespeicherten vorbestimmten Nutzdaten N' in Verbindung mit den Restnutzdaten N* arbeiten zu können (Schritt 152). In einer weiteren Ausführungsvariante können sich die Daten des Datensatzes CK' abhängig von der Benutzungsanzahl voneinander unterscheiden, wenn für den ersten Schlüssel ein gewechselter Code benutzt wird. Vor einer Fehlermeldung im Schritt 154 sind dann weitere Schritte durchzuführen, welche eine Entschlüsselung des Krypto-Codes bzw. die Authentifikation mit Hilfe anderer Code ausprobieren.

Mit den neuen Nutzdaten N der Chipkarte 49 können die nichtflüchtig gespeicherten Nutzdaten der Frankiermaschine aktualisiert werden. Letztere können nach ihrer Übernahme aus dem Speicherbereich C1 im Schritt 152 mindestens einem der weiteren Speicherbereiche Cn des nichtflüchtigen Speichers 94 der Frankiermaschine gespeichert werden und dort zur weiteren Verwendung vorliegen. Dabei können mit dem den Postbeförderer kennzeichnenden Teil der geladenen Nutzdaten N das Stempelbild befördererspezifisch geändert und mit dem tariflichen Teil der geladenen Nutzdaten N die gespeicherten Portogebührentabellen ganz oder teilweise aktualisiert werden.

Ebenso können mit dem tariflichen Teil der neuen Nutzdaten N der Chipkarte 47, 48 oder 49 die nichtflüchtig gespeicherten Nutzdaten einer Waage unter Leitung durch die Steuereinrichtung der Frankiermaschine aktualisiert werden, wie das bereits prinzipiell in der europäischen Anmeldung EP 724 1441 A1 beschrieben worden ist. Das der Frankiermaschine im Poststrom vorgeschaltete Gerät 13 (Fig.2) ist in diesem Fall eine portoberechnende Waage. Letztere enthält einen integrierten Portorechner mit nichtflüchtigen Speichern zur aktualisierbaren Speicherung von Multicarrier-Portogebührentabellen. Das Aktualisieren ist dann Bestandteil des in der Figur 5b gezeigten Schrittes 152 zum Übernehmen der Nutzdaten. Der Mikroprozessor ist programmiert, den tariflichen Teil der Nutzdaten N aus dem Speicherbereich C1 zu deren Anwendung in entsprechende Speicherbereiche einer portoberechnenden Waage 13 zu laden.

Ein postalisches Gerät ist - ähnlich wie in Figur 2 gezeigt - mindestens mit einer Steuereinrichtung 1, mit einer Chipkarten-Schreib/Leseeinheit 70 und mit einem postalischen Sicherheitsmittel 86 ausgestattet. Vorzugsweise kann ein mit entsprechenden Einschüben nachrüstbarer Computer zum postalischen Gerät nachgerüstet werden. Das Drukken erfolgt dann mit einem handelsüblichen Drucker.

Eine alternative Ausführungsvariante kann einen in oben genannter Weise nachgerüsteten Computer und einen angeschlossenen speziellen Frankierdrucker umfassen. In der nicht vorveröffentlichten deutschen Anmeldung 197 11 997.2 ist eine geeignete Ausführungsvariante vorgeschlagen worden, mit dem Titel: Postverarbeitungssystem mit einer über Personalcomputer gesteuerten druckenden Maschinen-Basisstation.

Der Personalcomputer müßte nur noch mit Chipkarten-Schreib/Leseeinheit 70 und einem entsprechenden Anwendungsprogramm ausgestattet werden. Hierzu könnte zum Beispiel der Einschub für das Modem genutzt werden. Das postalisches Gerät ist mit einer Chipkarten-Schreib/Leseeinheit 70 zum Nachladen von Änderungsdaten per Chipkarte und mit einer Steuereinrichtung 1 ausgestattet, an welcher eine Druckeinrichtung 20 angeschlossen ist, welche von der Steuereinrichtung 1 gesteuert wird. Die in einen Einsteckschlitz 72 der Chipkarten-Schreib/Leseeinheit 70 eingesteckte erste Chipkarte 49 gestattet das Nachladen eines Datensatzes CK in das postalische Gerät für mindestens eine Anwendung. Die Steuereinrichtung 1 weist einen Mikroprozessor 91 mit zugehörigen Speichern 92, 93, 94, 95 auf.

Es ist vorgesehen, daß die Steuereinrichtung 1 des postalischen Gerätes mit der Chipkarten-Schreib/Leseeinheit 70 und mit einem postalischen Sicherheitsmittel 86 verbunden ist, wobei das postalische Sicherheitsmittel 86 einen anwendungsspezifischen Schaltkreis ASIC 87, einen nichtflüchtigen Speicher 84 und einen Mikroprozessor 85 aufweist, wobei der Mikroprozessor 85 des postalischen Sicherheitsmittels 86 programmiert ist,

a) auf erste und zweite Speicherbereiche (C1) und (C2) des nichtflüchtigen Speichers (84) des postalischen Sicherheitsmittels (86) zuzugreifen, in welchen der aus der Chipkarte geladene Datensatz (CK) und der neu in die Chipkarte zu ladende Datensatz (CK') gespeichert wird,
b) eine spezielle Rechenoperation oder Maske auf die im geladenen Datensatz (CK) enthaltenen Nutzdaten (N) anzuwenden, um eine Datenentnahme aus dem Speicherbereich (C1) mit Abtrennung der vorbestimmten Nutzdaten (N') von den Restnutzdaten (N*) vorzunehmen,
c) auf die Speicherbereiche (C3) und (C4) des nichtflüchtigen Speichers (84) des postalischen Sicherheitsmittels (86) zuzugreifen, in welchen ein erster Schlüssel (K1) und dritter Schlüssel (K3) und ein Verschlüsselungsalgorithmus geschützt vor einem unautorisierten Auslesen gespeichert vorliegen,
d) die vorbestimmten Nutzdaten (N') mit dem ersten Schlüssel (K1) zu einem Krypto-Code (KC) zu verschlüsseln und im zweiten Speicherbereich (C2) zu speichern und unter Verwendung der Restnutzdaten (N*) den neuen Datensatz (CK') zu bilden,
e) den gebildeten neuen Datensatz (CK') in die Chipkarte zu laden sowie
f) die Nutzdaten (N) aus dem Speicherbereich (C1) zu deren Anwendung in entsprechende Speicherbereiche zu laden.

Die Steuereinrichtung 1 des postalischen Gerätes ist beispielsweise die Steuereinrichtung einer Frankiermaschine oder ein Computer, welcher entsprechend umgerüstet und mit einer Frankiermaschine verbunden ist. Zur o.g. Umrüstung einer Frankiermaschine oder eines Computer ist vorgesehen, daß die Steuereinrichtung 1 des postalischen Gerätes mit der Chipkarten-Schreib/Lese-Einheit 70 und mit einem postalischen Sicherheitsmittel 86 verbunden ist, wobei das postalische Sicherheitsmittel 86 einen anwendungs-spezifischen Schaltkreis ASIC 87, einen nichtflüchtigen Speicher 84 und einen Mikroprozessor 85 aufweist, wobei der Mikroprozessor 85 des postalischen Sicherheitsmittels 86 programmiert ist, auf erste und zweite Speicherbereiche (C1) und (C2) des nichtflüchtigen Speichers (84) des postalischen Sicherheitsmittels (86) zuzugreifen, in welchen der aus der Chipkarte geladene Datensatz (CK) und der neu in die Chipkarte zu ladende Datensatz (CK') gespeichert wird.

## Patentansprüche

1. Verfahren zum Nachladen von Änderungsdaten per Chipkarte in nichtflüchtige Speicher eines postalischen Gerätes, beginnend mit automatischer Typerkennung nach dem erstmaligen Einstecken einer ersten Chipkarte (49) in eine Chipkarten-Schreib/Leseeinheit (70) des postalischen Gerätes, mit einem Nachladen von Nutzdaten (N) aus der ersten Chipkarte (49) in das postalische Gerät, mit einem Verändern von Daten (N') aus den geladenen Nutzdaten (N) in dem postalischen Gerät in vorbestimmter Weise, mit einem Einschreiben der in vorbestimmter Weise veränderten Daten als Krypto-Code (KC) in die Chipkarte (49) im Ergebnis des ersten Nachladens, mit einer automatischer Typerkennung nach dem Einstecken einer zweiten Chipkarte (47, 48) in die Chipkarten-Schreib/Leseeinheit, mit einem Laden von Daten aus der zweiten Chipkarte (47, 48) in das postalische Gerät, sowie mit einer automatischen Typerkennung beim später wiederholten Einstecken der ersten Chipkarte (49), mit einem erneuten Datenladen in das postalische Gerät, wobei die Chipkarte (49) nur für dasselbe postalische Gerät brauchbare Daten liefert.

2. Verfahren, nach Anspruch 1, **gekennzeichnet dadurch, daß** im Falle eines erneuten Datenladens aus der ersten Chipkarte (49) in das postalische Gerät auch ein zusätzliches Einschreiben von in vorbestimmter Weise in dem postalischen Gerät veränderten Daten (KC) in die Chipkarte (49) im Ergebnis des Nachladens durchgeführt wird.

3. Verfahren, nach Anspruch 2, **gekennzeichnet dadurch, daß** sich bei einer wiederholten Benutzung der ersten Chipkarte (49) die veränderten Daten (KC) in Abhängigkeit von der Anzahl der Benutzungen unterscheiden, wobei ein erneutes Datenladen in das postalische Gerät und ein zusätzliches Einschreiben von in anderer vorbestimmter Weise in dem postalischen Gerät veränderten Daten (KC) in die Chipkarte (49) erfolgt.

4. Postalisches Gerät, zur Durchführung des Verfahrens nach Anspruch 1, mit einer Chipkarten-Schreib/Leseeinheit (70) zum Nachladen von Änderungsdaten per Chipkarte und mit einer Steuereinrichtung (1), an welcher eine Druckeinrichtung (20) anschließbar ist, welche von der Steuereinrichtung (1) gesteuert wird, wobei eine in einen Einsteckschlitz (72) der Chipkarten-Schreib/Leseeinheit (70) eingesteckte erste Chipkarte (49) ein Nachladen eines Datensatzes (CK) in das postalische Gerät für mindestens eine Anwendung gestattet, wobei die Steuereinrichtung (1) einen Mikroprozessor (91) mit zugehörigen Speichern (92, 93, 95) aufweist, **gekennzeichnet dadurch, daß** die Steuereinrichtung (1) programmiert ist,

a) auf erste und zweite Speicherbereiche (C1) und (C2) eines nichtflüchtigen Speichers (84, 94) zuzugreifen, in welchen der aus der Chipkarte geladene Datensatz (CK) und der neu in die Chipkarte zu ladende Datensatz (CK') gespeichert wird,
b) eine spezielle Rechenoperation oder Maske auf die im geladenen Datensatz (CK) enthaltenen Nutzdaten (N) anzuwenden, um eine Datenentnahme aus dem Speicherbereich (C1) mit Abtrennung der vom Programm vorbestimmten Nutzdaten (N') von den Restnutzdaten (N*) vorzunehmen,
c) auf die Speicherbereiche (C3) und (C4) des nichtflüchtigen Speichers (84, 94) zuzugreifen, in welchen mindestens ein erster Schlüssel (K1) und ein Verschlüsselungsalgorithmus geschützt vor einem unautorisierten Auslesen gespeichert vorliegen,
d) die vorbestimmten Nutzdaten (N') mit dem ersten Schlüssel (K1) zu einem Krypto-Code (KC) zu verschlüsseln und im zweiten Speicherbereich (C2) zu speichern und unter Verwendung der Restnutzdaten (N*) den neuen Datensatz (CK') zu bilden,
e) den gebildeten neuen Datensatz (CK') in die Chipkarte zu laden sowie
f) die Nutzdaten (N) aus dem Speicherbereich (C1) zu deren Anwendung in entsprechende Speicherbereiche der Steuereinrichtung (1) zu laden.

**5.** Postalisches Gerät, nach Anspruch 4, **gekennzeichnet dadurch, daß** die Steuereinrichtung (1) des postalischen Gerätes ein Computer ist, welcher mit einer Frankiermaschine verbunden ist, daß die Steuereinrichtung (1) mit der Chipkarten-Schreib/Leseeinheit (70) und mit einem postalischen Sicherheitsmittel (86) verbunden ist, wobei das postalische Sicherheitsmittel (86) einen anwendungsspezifischen Schaltkreis ASIC (87), einen nichtflüchtigen Speicher (84) und einen Mikroprozessor (85) aufweist, wobei der Mikroprozessor (85) des postalischen Sicherheitsmittels (86) programmiert ist, auf erste und zweite Speicherbereiche (C1) und (C2) des nichtflüchtigen Speichers (84) des postalischen Sicherheitsmittels (86) zuzugreifen, in welchen der aus der Chipkarte geladene Datensatz (CK) und der neu in die Chipkarte zu ladende Datensatz (CK') gespeichert wird.

**6.** Postalisches Gerät, nach Anspruch 4, **gekennzeichnet dadurch, daß** die Steuereinrichtung (1) des postalischen Gerätes die Steuereinrichtung (1) einer Frankiermaschine ist, daß die Steuereinrichtung (1) mit der Chipkarten-Schreib/Leseeinheit (70) und mit einem postalischen Sicherheitsmittel (86) verbunden ist, wobei das postalische Sicherheitsmittel (86) einen anwendungsspezifischen Schaltkreis ASIC (87), einen nichtflüchtigen Speicher (84) und einen Mikroprozessor (85) aufweist, wobei der Mikroprozessor (85) des postalischen Sicherheitsmittels (86) programmiert ist, auf erste und zweite Speicherbereiche (C1) und (C2) des nichtflüchtigen Speichers (84) des postalischen Sicherheitsmittels (86) zuzugreifen, in welchen der aus der Chipkarte geladene Datensatz (CK) und der neu in die Chipkarte zu ladende Datensatz (CK') gespeichert wird.

**7.** Postalisches Gerät, nach Anspruch 4, **gekennzeichnet dadurch, daß** die Steuereinrichtung (1) des postalischen Gerätes die einer Frankiermaschine ist, daß das Steuergerät (90) der Frankiermaschine mit der Chipkarten-Schreib/Leseeinheit (70) verbunden ist, wobei der Mikroprozessor (91) des Steuergerätes (90) programmiert ist,

a) auf erste und zweite Speicherbereiche (C1) und (C2) des nichtflüchtigen Speichers (94, 95) des Steuergerätes (90) zuzugreifen, in welchen der aus der Chipkarte geladene Datensatz (CK) und der neu in die Chipkarte zu ladende Datensatz (CK') gespeichert wird,
b) eine spezielle Rechenoperation oder Maske auf die im geladenen Datensatz (CK) enthaltenen Nutzdaten (N) anzuwenden, um eine Datenentnahme aus dem Speicherbereich (C1) mit Abtrennung der vorbestimmten Nutzdaten (N') von den Restnutzdaten (N*) vorzunehmen,
c) auf die Speicherbereiche (C3) und (C4) des nichtflüchtigen Speichers (94, 95) des Steuergerätes (90) zuzugreifen, in welchen mindestens ein erster Schlüssel (K1) und ein Verschlüsselungsalgorithmus geschützt vor einem unautorisierten Auslesen gespeichert vorliegen,
d) die vorbestimmten Nutzdaten (N') mit dem ersten Schlüssel (K1) zu einem Krypto-Code (KC) zu verschlüsseln und im zweiten Speicherbereich (C2) zu speichern und unter Verwendung der Restnutzdaten (N*) den neuen Datensatz (CK') zu bilden,
e) den gebildeten neuen Datensatz (CK') in die Chipkarte zu laden sowie
f) die Nutzdaten (N) aus dem Speicherbereich (C1) zu deren Anwendung in entsprechende Speicherbereiche des nichtflüchtigen Speichers (94, 95) des Steuergerätes (90) zu laden.

8. Postalisches Gerät, nach einem der Ansprüche 4 bis 7, **dadurch gekennzeichnet, daß** der Mikroprozessor programmiert ist, die Anwendungen am Chipkartentyp zu unterscheiden, wobei für jeden Chipkartentyp mindestens eine Anwendung von möglichen Betriebsfunktionen einer Frankiermaschine vorgesehen ist, daß der Mikroprozessor programmiert ist, zum Nachladen und zum Verändern von Daten (N') aus den geladenen Nutzdaten (N) und zur Überprüfung der Autorisation der Nutzdaten, wobei die Nutzdaten in einem ersten Speicherbereich (CC1) der Chipkarte gespeichert sind und die Restnutzdaten (N*) und veränderliche Daten (N') bzw. nach der Erstbenutzung ein Krypto-Code (KC) umfassen, wobei in einem zweiten Speicherbereich (CC2) der Chipkarte zur Autorisation der Nutzdaten ein Code (MAC2) bzw. nach der Erstbenutzung ein anderer Code (MAC1) gespeichert vorliegt, wobei der Krypto-Code (KC) in der Frankiermaschine errechnet und in die Chipkarte eingeschrieben wird, so daß die Chipkarte nur noch für dieselbe Frankiermaschine brauchbare Daten liefert.

9. Postalisches Gerät, nach den Ansprüchen 7 bis 8, **gekennzeichnet dadurch, daß** der Mikroprozessor programmiert ist, den tariflichen Teil der Nutzdaten (N) aus dem Speicherbereich (C1) zu deren Anwendung in entsprechende Speicherbereiche einer portoberechnenden Waage (13) zu laden.

## Claims

1. A method for reloading alteration data into non-volatile memory units of a postal apparatus by means of chip card, starting with automatic type recognition after the first insertion of a first chip card (49) into a chip-card write/read unit (70) of the postal apparatus, with a reloading of user data (N) from the first chip card (49) into the postal apparatus, with an alteration of Data (N') from the loaded user data (N) in the postal apparatus in a pre-defined manner, with a writing of the data altered in a pre-defined manner as crypto-code (KC) on the chip card (49) as a result of the first reloading, with an automatic type recognition after the insertion of a second chip card (47, 48) into the chip-card write/read unit, with a loading of data from the second chip card (47, 48) into the postal apparatus, as well as with an automatic type recognition upon subsequent repeated insertion of the first chip card (49), with a repeated loading of data into the postal apparatus, wherein chip card (49) provides useful data exclusively for the same postal apparatus.

2. A method according to claim 1, **characterized in that**, in case of a repeated loading of data from the first chip card (49) into the postal apparatus, there is also performed an additional writing of data altered in a pre-defined manner in the postal apparatus (KC) on the chip card (49) as a result of said reloading.

3. A method according to claim 2, **characterized in that**, in case of a repeated use of the first chip card (49), the altered data (KC) differ depending on the number of utilizations, a repeated loading of data into the postal apparatus and an additional writing of data altered in another pre-defined manner in the postal apparatus (KC) on the chip card (49) being performed.

4. A postal apparatus for performing the method according to claim 1 having a chip-card write/read unit (70) for reloading alteration data by means of a chip card and a control unit (1) to which a printing device (20) can be connected that is controlled by control unit (1), wherein a first chip card (49) inserted in a slot (72) of the chip-card write/read unit (70) allows for reloading a data record (CK) into the postal apparatus for at least one application, wherein control unit (1) comprises a microprocessor (91) with appertaining memory units (92, 93, 95), **characterized in that** control unit (1) is programmed for

a) accessing first and second memory areas (C1) and (C2) of a non-volatile memory (84, 94) in which the data record (CK) read from the chip card and the data record (CK') to be newly loaded into the chip card are stored;
b) applying a special computing operation or mask to the user data (N) contained in the loaded data record (CK) in order to effect a data extraction from the memory area (C1) with a separation of the user data (N') pre-determined by the program from the residual user data (N*);
c) accessing the memory areas (C3) and (C4) of the non-volatile memory (84, 94) in which at least a first key (K1) and an encryption algorithm are available stored in a manner protected from unauthorized readout;
d) encrypting the pre-determined user data (N') by means of a first key (K1) into a crypto-code (KC) and storing it in the second memory area (C2) and forming the new data record (CK') using the residual user data (N*);
e) loading the newly formed data record (CK') into the chip card; and
f) loading the user data (N) from the memory area (C1) into respective memory areas of the control unit (1) for their utilization.

5. A postal apparatus according to claim 4, **characterized in that** the control unit (1) of the postal apparatus is a computer connected to a franking machine; that the control unit (1) is connected to the chip-card write/read unit (70) and a postal security means (86), said postal security means (86) comprising a specific application-related circuit ASIC (87), a non-volatile memory (84) and a microprocessor (85), said microprocessor (85) of said postal security means (86) being programmed for accessing first and second memory areas (C1) and (C2) of the non-volatile memory (84) of the postal security means (86) in which the data record (CK) loaded from the chip card and the data record (CK') to be newly stored in the chip card are stored.

6. A postal apparatus according to claim 4, **characterized in that** the control unit (1) of the postal apparatus is the control unit (1) of a franking machine; that the control unit (1) is connected to the chip-card write/read unit (70) and a postal security means (86), said postal security means (86) comprising a specific application-related circuit ASIC (87), a non-volatile memory (84) and a microprocessor (85), said microprocessor (85) of said postal security means (86) being programmed for accessing first and second memory areas (C1) and (C2) of the non-volatile memory (84) of the postal security means (86) in which the data record (CK) loaded from the chip card and the data record (CK') to be newly stored in the chip card are stored.

7. A postal apparatus according to claim 4, **characterized in that** the control unit (1) of the postal apparatus is that of a franking machine; that the control device (90) of the franking machine is connected to the chip-card write/read unit (70), the microprocessor (91) of the control device (90) being programmed for

a) accessing first and second memory areas (C1) and (C2) of the non-volatile memory (94, 95) of the control device (90) in which the data record (CK) read from the chip card and the data record (CK') to be newly loaded into the chip card are stored;
b) applying a special computing operation or mask to the user data (N) contained in the loaded data record (CK) in order to effect a data extraction from the memory area (C1) with a separation of the pre-determined user data (N') from the residual user data (N*);
c) accessing the memory areas (C3) and (C4) of the non-volatile memory (94, 95) of the control device (90) in which at least a first key (K1) and an encryption algorithm are available stored in a manner protected from unauthorized readout;
d) encrypting the pre-determined user data (N') by means of a first key (K1) into a crypto-code (KC) and storing it into the second memory area (C2) and forming the new data record (CK') using the residual user data (N*);
e) loading the newly formed data record (CK') into the chip card; and
f) loading the user data (N) from the memory area (C1) into respective memory areas of the non-volatile memory (94, 95) of the control device (90) for their utilization.

8. A postal apparatus according to one of the claims 4 to 7, **characterized in that** the microprocessor is programmed for distinguishing between the applications by the type of chip card, each chip card type being related to at least one application of possible operating functions of a franking machine; that that the microprocessor is programmed for reloading and altering data (N') from the loaded user data (N) and for verifying the authorization of the user data, wherein the user data are stored in a first memory area (CC1) of the chip card and comprise the residual user data (N*) and alterable data (N') and, after the first use, a crypto-code (KC); wherein, for authorizing the user data, a code (MAC2) and, after the first use, another code (MAC1) is available stored in a second memory area (CC2) of the chip card; wherein the crypto-code (KC) is calculated in the franking machine and written in the chip card so that the chip card will provide useful data exclusively for the same franking machine.

9. A postal apparatus according to claims 7 to 8, **characterized in that** the microprocessor is programmed for loading the tariff part of the user data (N) for their utilization from the memory area (C1) into respective memory areas of a postage-calculating balance (13).

**Revendications**

1. Procédé pour le rechargement de données de changement par carte à puce dans les mémoires non-volatiles d'un appareil postal, commençant avec la reconnaissance automatique de type après le premier enfichement d'une première carte à puce (49) dans une unité de lecture/écriture de cartes à puce (70) de l'appareil postal, avec un rechargement de données utiles (N) à partir de la première carte à puce (49) dans l'appareil postal, avec un changement de données (N') à partir des données utiles (N) chargées dans l'appareil postal de manière prédéterminée, avec une inscription des données changées de manière prédéterminée en tant que code crypté (KC) dans la carte à puce (49) suite au premier rechargement, avec une reconnaissance automatique de type après l'enfichement d'une deuxième carte à puce (47, 48) dans l'unité de lecture/écriture de cartes à puce, avec un chargement de données à partir de la deuxième carte à puce (47, 48) dans l'appareil postal, ainsi qu'avec une reconnaissance automatique de type lors de l'enfichement ultérieur répété de la première carte à puce (49), avec un nouveau chargement de données dans l'appareil postal, ladite carte à puce (49) ne fournissant de données utilisables que pour le même appareil postal.

**2.** Procédé selon la revendication 1 **caractérisé en ce qu'**en cas d'un nouveau chargement de données à partir de la première carte à puce (49) dans l'appareil postal, une inscription supplémentaire des données (KC) modifiées dans la carte à puce (49) suite au rechargement de manière prédéterminée dans l'appareil postal est effectuée.

**3.** Procédé selon la revendication 2 **caractérisé en ce que** lors d'une utilisation répétée de la première carte à puce (49), les données modifiées (KC) se différencient en fonction du nombre d'utilisations, un nouveau chargement de données dans l'appareil postal et une inscription supplémentaire des données modifiées (KC) dans la carte à puce (49) d'une autre manière prédéterminée dans l'appareil postal ayant lieu.

**4.** Appareil postal pour la réalisation du procédé selon la revendication 1 avec une unité de lecture/écriture de cartes à puce (70) pour le rechargement de données de changement par carte à puce et avec un dispositif de pilotage (1), auquel un dispositif d'impression (20) peut être relié, ledit dispositif d'impression étant piloté par le dispositif de pilotage (1), une première carte à puce (49) enfichée dans une fente d'enfichement (72) de l'unité de lecture/écriture de cartes à puce (70) permettant un rechargement d'un jeu de données (CK) dans l'appareil postal pour au moins une application, le dispositif de pilotage (1) comportant un microprocesseur (91) avec des mémoires correspondantes (92, 93, 95), **caractérisé en ce que** le dispositif de pilotage (1) est programmé,

a) pour accéder à la première et la deuxième zone de mémoire (C1) et (C2) d'une mémoire non-volatile (84, 94), dans lesquelles le jeu de données (CK) chargé à partir de la carte à puce et le jeu de données (CK') à charger de nouveau dans la carte à puce sont enregistrés,
b) pour appliquer une opération arithmétique spéciale ou des masques sur les données utiles (N) contenues dans le jeu de données (CK) chargé, afin d'effectuer un prélèvement de données à partir de la zone de mémoire (C1) avec séparation des données utiles (N') prédéterminées par le programme, des données utiles résiduelles (N*),
c) pour accéder aux zones de mémoire (C3) et (C4) de la mémoire non-volatile (84, 94), dans lesquelles au moins une première clé (K1) et un algorithme de chiffrement sont enregistrés de manière à être protégés contre une lecture non-autorisée,
d) pour chiffrer les données utiles (N') prédéterminées avec la première clé (K1) pour un code crypté (KC) et les enregistrer dans la deuxième zone de mémoire (C2) et former les nouveaux jeux de données (CK') en utilisant les données utiles résiduelles (N*),
e) pour charger le nouveau jeu de données (CK') formé dans la carte à puce ainsi que
f) pour charger les données utiles (N) à partir de la zone de mémoire (C1) pour les appliquer dans les zones de mémoire correspondantes du dispositif de pilotage (1).

**5.** Appareil postal selon la revendication 4, **caractérisé en ce que** le dispositif de pilotage (1) de l'appareil postal est un ordinateur relié à une machine à affranchir, **en ce que** le dispositif de pilotage (1) est relié à l'unité de lecture/écriture de cartes à puce (70) et à un moyen de sécurité postal (86), ledit moyen de sécurité postal (86) comportant un circuit ASIC (87) propre à une application, une mémoire non-volatile (84) et un microprocesseur (85), ledit microprocesseur (85) du moyen de sécurité postal (86) étant programmé pour accéder à la première et la deuxième zone de mémoire (C1) et (C2) de la mémoire non-volatile (84) du moyen de sécurité postal (86), dans lesquelles le jeu de données (CK) chargé à partir de la carte à puce et le jeu de données (CK') à charger à nouveau dans la carte à puce sont enregistrés.

**6.** Appareil postal selon la revendication 4 **caractérisé en ce que** le dispositif de pilotage (1) de l'appareil postal est le dispositif de pilotage (1) d'une machine à affranchir, **en ce que** le dispositif de pilotage (1) est relié à l'unité de lecture/écriture de cartes à puce (70) et à un moyen de sécurité postal (86), ledit moyen de sécurité postal (86) comportant un circuit ASIC (87) propre à une application, une mémoire non-volatile (84) et un microprocesseur (85), ledit microprocesseur (85) du moyen de sécurité postal (86) étant programmé, pour accéder à la première et la deuxième zone de mémoire (C1 ) et (C2) de la mémoire non-volatile (84) du moyen de sécurité postal (86), dans lesquelles le jeu de données (CK) chargé à partir de la carte à puce et le jeu de données (CK') à charger à nouveau dans la carte à puce sont enregistrés.

**7.** Appareil postal selon la revendication 4 **caractérisé en ce que** le dispositif de pilotage (1) de l'appareil postal est une machine à affranchir, **en ce que** l'appareil de pilotage (90) de la machine à affranchir est relié à l'unité de lecture/écriture de cartes à puce (70), le microprocesseur (91) de l'appareil de pilotage (90) étant programmé,

a) pour accéder à la première et la deuxième zone de mémoire (C1) et (C2) de la mémoire non-volatile (94, 95) de l'appareil de pilotage (90), dans lesquelles le jeu de données (CK) chargé à partir de la carte à puce et le jeu de données (CK') à charger de nouveau dans la carte à puce sont enregistrés,
b) pour appliquer une opération arithmétique spéciale ou des masques sur les données utiles (N) contenues dans le jeu de données (CK) chargé, afin d'effectuer un prélèvement de données à partir de la zone de mémoire (C1) avec séparation des données utiles (N') prédéterminées par le programme, des données utiles résiduelles (N*),
c) pour accéder aux zones de mémoire (C3) et (C4) de la mémoire non-volatile (94, 95) de l'appareil de pilotage (90), dans lesquelles au moins une première clé (K1) et un algorithme de chiffrement sont enregistrés de manière à être protégés contre une lecture non-autorisée,
d) pour chiffrer les données utiles (N') prédéterminées avec la première clé (K1) pour un code crypté (KC) et les enregistrer dans la deuxième zone de mémoire (C2) et former le nouveau jeu de données (CK') en utilisant les données utiles résiduelles (N*),
e) pour charger le nouveau jeu de données (CK') formé dans la carte à puce ainsi que
f) pour charger les données utiles (N) à partir de la zone de mémoire (C1) pour les appliquer dans les zones de mémoire correspondantes de la mémoire non-volatile (94, 95) de l'appareil de pilotage (90).

**8.** Appareil postal selon l'une quelconque des revendications 4 à 7, **caractérisé en ce que** le microprocesseur est programmé pour différencier les applications selon le type de carte à puce, au moins une application de fonctions opérationnelles possibles d'une machine à affranchir étant prévue pour chaque type de carte à puce, **en ce que** le microprocesseur est programmé pour le rechargement et pour le changement de données (N') à partir des données utiles chargées (N) et pour le contrôle de l'autorisation des données utiles, les données utiles étant enregistrées dans une première zone de mémoire (CC1) de la carte à puce, et les données utiles résiduelles (N*) et les données variables (N') comprenant respectivement après la première utilisation un code crypté (KC), un code (MAC2) et ou un autre code (MAC1) après la première utilisation étant enregistrés dans une deuxième zone de mémoire (CC2) de la carte à puce pour l'autorisation des données utiles, le code crypté (KC) étant calculé dans la machine à affranchir et inscrit dans la carte à puce de manière à ce que la carte à puce ne fournisse plus des données utilisables que pour la même machine à affranchir.

**9.** Appareil postal selon les revendications 7 à 8 **caractérisé en ce que** le microprocesseur est programmé pour charger la partie tarifaire des données utiles (N) à partir de la zone de mémoire (C1) pour l'appliquer dans les zones de mémoire correspondantes d'une balance calculant les frais de port (13).

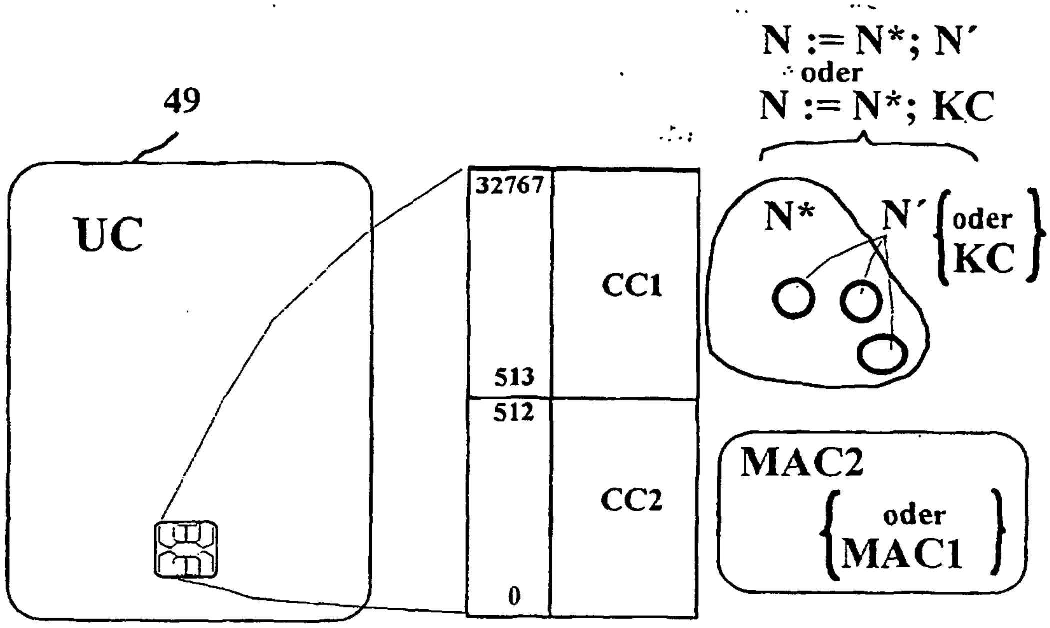
49
UC
32767
513
512
0
CC1
CC2
N := N*; N′
oder
N := N*; KC
N*
N′
oder
KC
MAC2
oder
MAC1

Fig. 1a

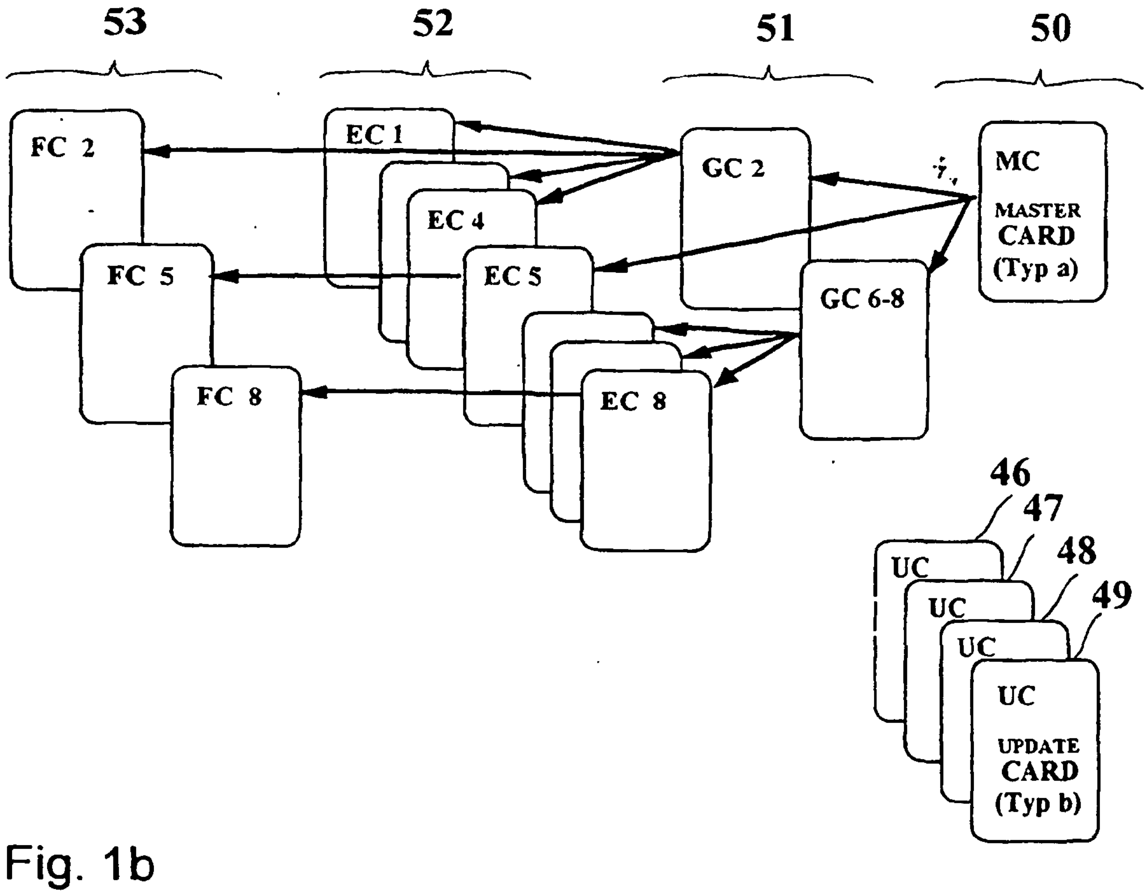
53
52
51
50
FC 2
FC 5
FC 8
EC 1
EC 4
EC 5
EC 8
GC 2
GC 6-8
MC
MASTER
CARD
(Typ a)
46
47
48
49
UC
UC
UC
UC
UPDATE
CARD
(Typ b)

Fig. 1b

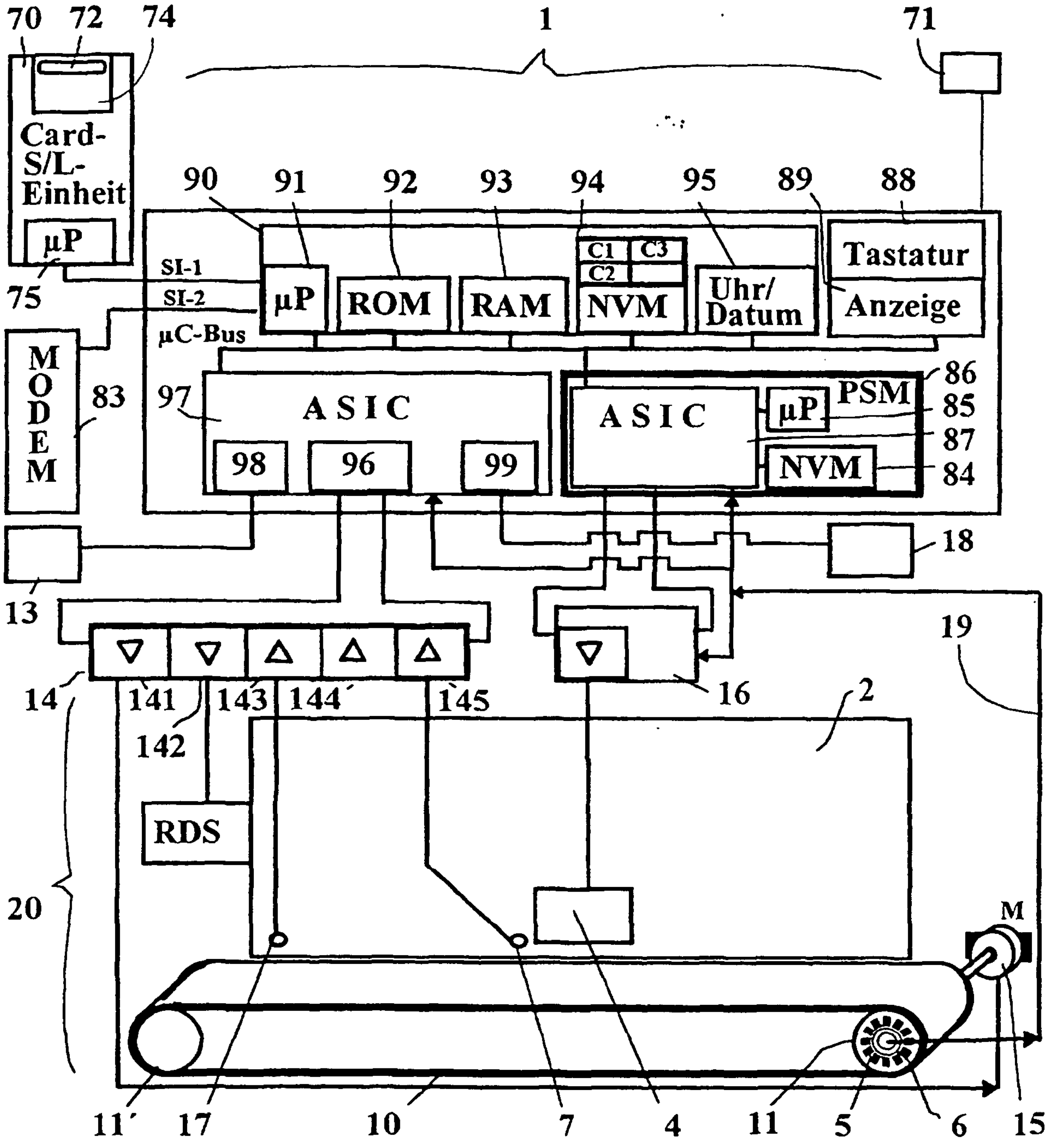
70
72
74
1
71
Card-
S/L-
Einheit
µP
75
SI-1
SI-2
µC-Bus
90
91
92
93
94
95
89
88
µP
ROM
RAM
C1
C3
C2
NVM
Uhr/
Datum
Tastatur
Anzeige
M
O
D
E
M
83
97
ASIC
98
96
99
ASIC
µP
PSM
NVM
86
85
87
84
13
18
19
14
141
142
143
144´
145
16
2
RDS
20
M
11´
17
10
7
4
11
5
6
15

Fig. 2

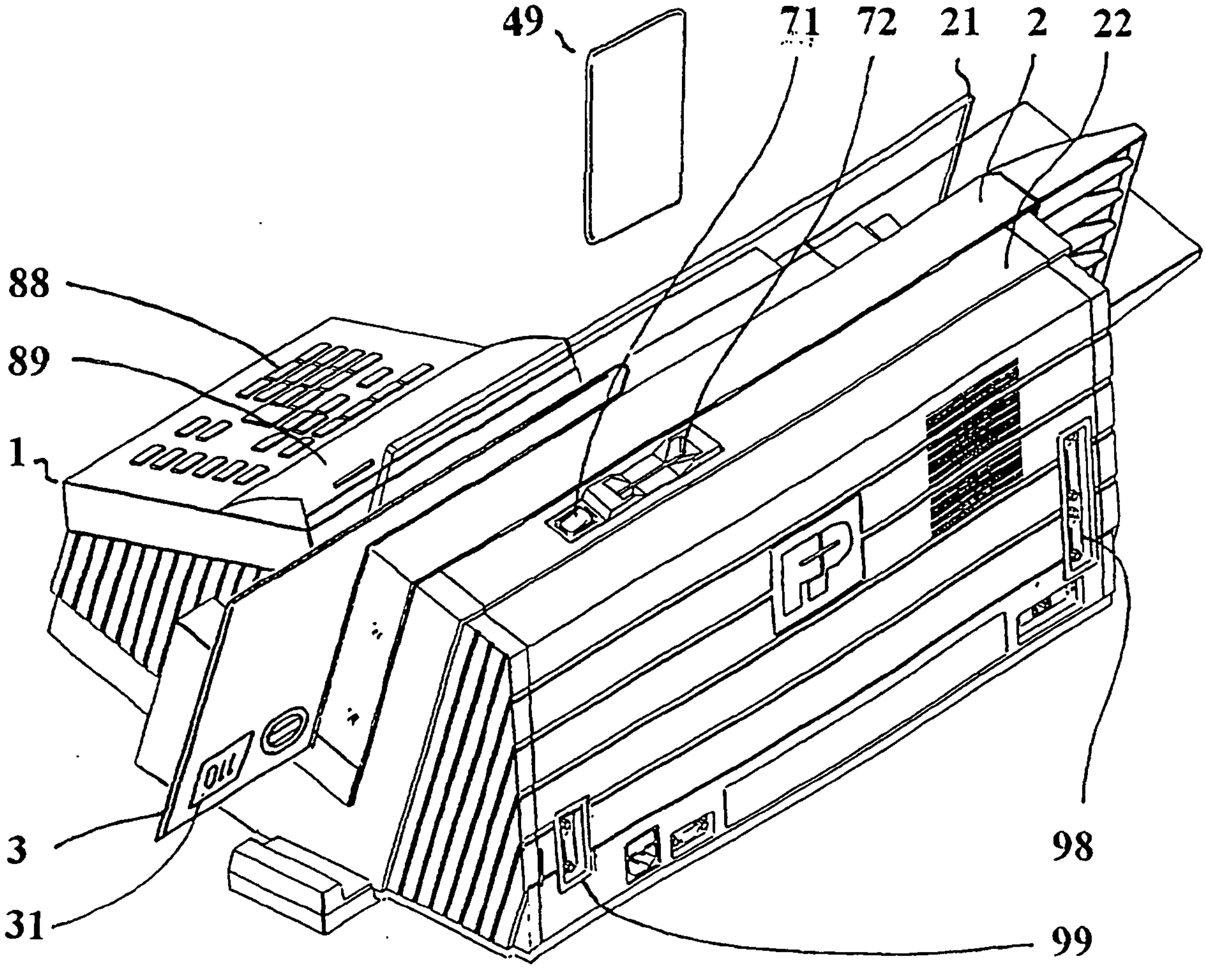


Fig. 3

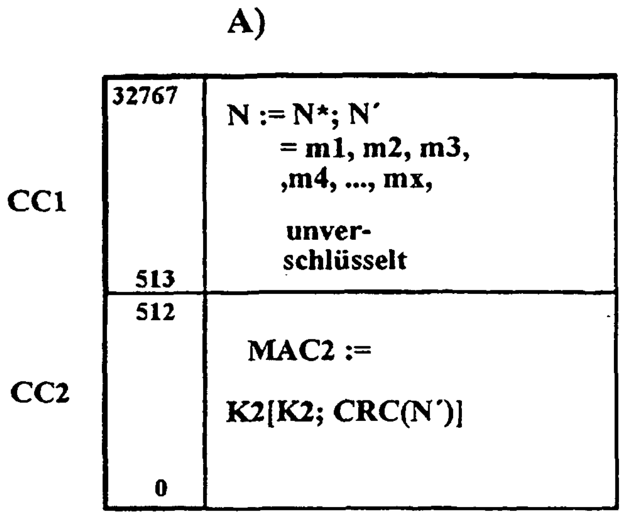


Fig. 4a

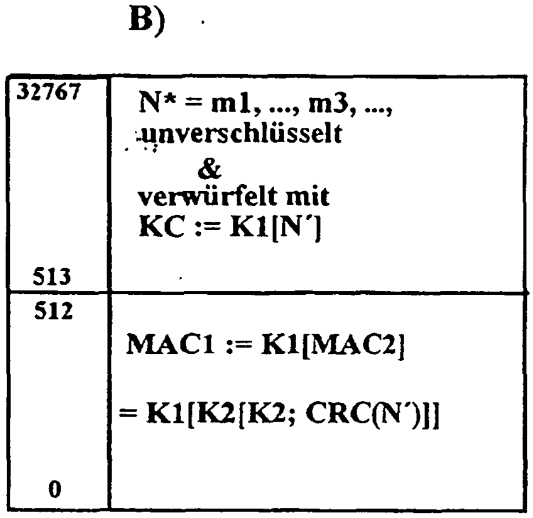


Fig. 4b

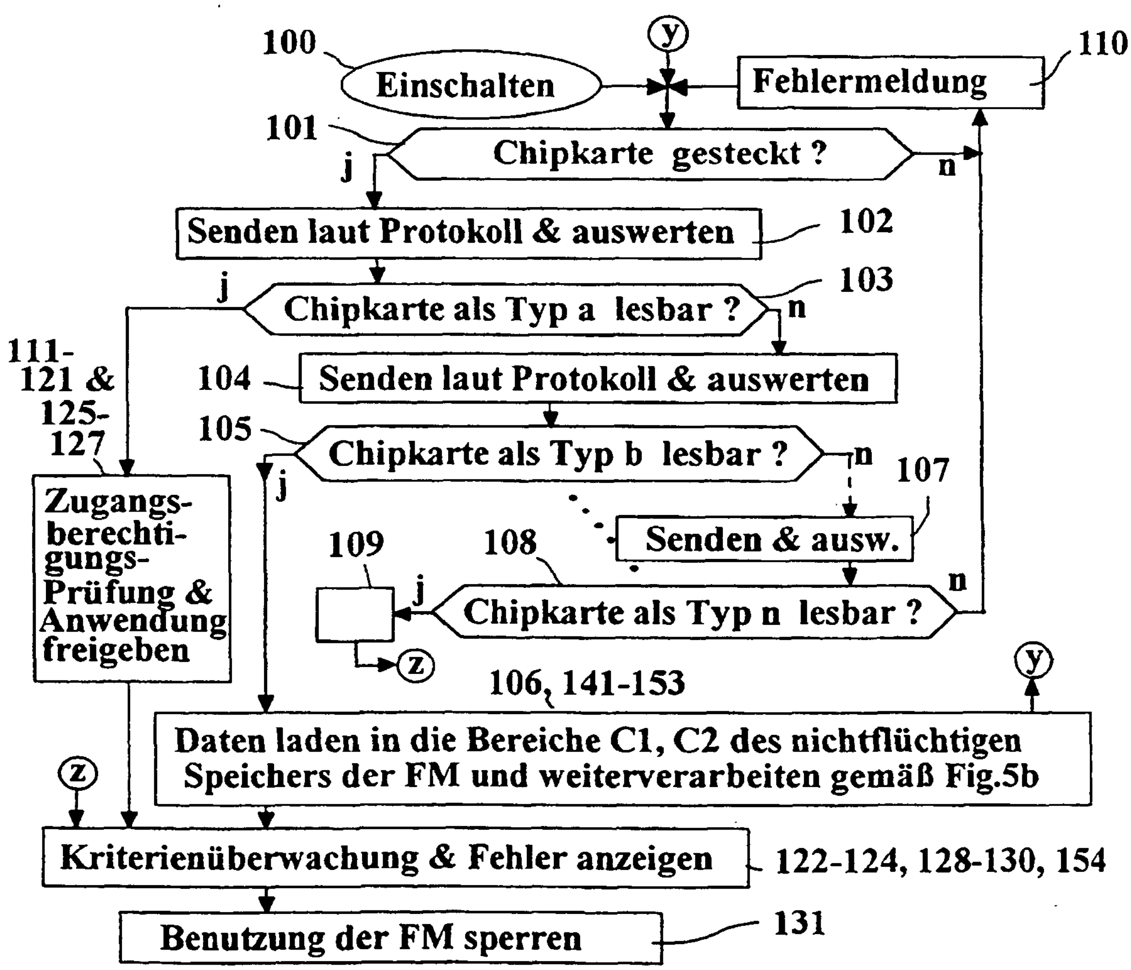


Fig. 5a

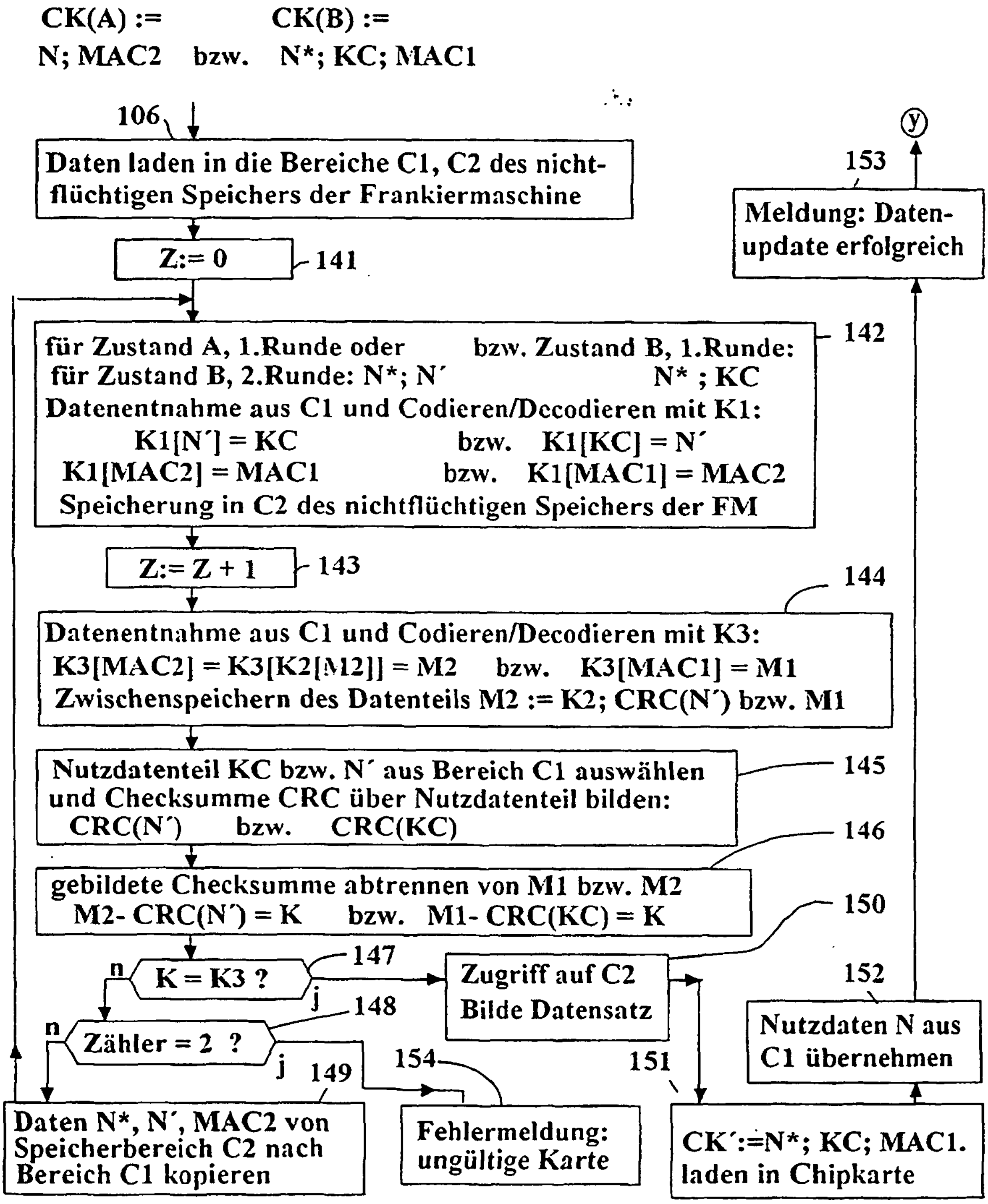
CK(A) :=
N; MAC2 bzw.
CK(B) :=
N*; KC; MAC1
106
Daten laden in die Bereiche C1, C2 des nichtflüchtigen Speichers der Frankiermaschine
Z:= 0
141
für Zustand A, 1.Runde oder für Zustand B, 2.Runde: N*; N′
bzw. Zustand B, 1.Runde: N* ; KC
Datenentnahme aus C1 und Codieren/Decodieren mit K1:
K1[N′] = KC bzw. K1[KC] = N′
K1[MAC2] = MAC1 bzw. K1[MAC1] = MAC2
Speicherung in C2 des nichtflüchtigen Speichers der FM
142
Z:= Z + 1
143
Datenentnahme aus C1 und Codieren/Decodieren mit K3:
K3[MAC2] = K3[K2[M12]] = M2 bzw. K3[MAC1] = M1
Zwischenspeichern des Datenteils M2 := K2; CRC(N′) bzw. M1
144
Nutzdatenteil KC bzw. N′ aus Bereich C1 auswählen und Checksumme CRC über Nutzdatenteil bilden:
CRC(N′) bzw. CRC(KC)
145
gebildete Checksumme abtrennen von M1 bzw. M2
M2- CRC(N′) = K bzw. M1- CRC(KC) = K
146
K = K3 ?
n
j
147
Zähler = 2 ?
n
j
148
149
Daten N*, N′, MAC2 von Speicherbereich C2 nach Bereich C1 kopieren
154
Fehlermeldung: ungültige Karte
Zugriff auf C2
Bilde Datensatz
150
151
CK′:=N*; KC; MAC1. laden in Chipkarte
152
Nutzdaten N aus C1 übernehmen
153
Meldung: Datenupdate erfolgreich
y

Fig. 5b